# EUROPEAN PATENT APPLICATION

(11) **EP 4 462 345 A1**
(43) Date of publication of application: **13.11.2024**
(21) Application number: 23172151.5
(22) Date of filing: 08.05.2023
(51) Int. Cl.: G06Q 50/12, A23P 10/00, G06F 3/01, G09B 7/00, G16H 20/60

(54) **SYSTEM AND METHOD FOR SUPPORTING FOOD AND/OR BEVERAGE PREPARATION AND GASTRONOMY OPERATION**

(71) Applicant: Theodor Ackbarow Holding-GmbH, 81675 Munich (DE)
(72) Inventor: Ackbarow, Theodor, 81675 Munich (DE)
(74) Representative: Stellbrink & Partner Patentanwälte mbB

(57) **Abstract**

The present invention relates to a system, comprising a data-processing system comprising a data-storage component configured for storing a plurality of instruction sets, at least one or a plurality of user interface(s) configured for outputting data, and at least one sensor. The at least one sensor is configured for detecting at least one action of a user, particularly a plurality of actions of a plurality of users. The system is configured for detecting the at least one action by processing data generated by the at least one sensor using a data-processing algorithm. At least one of the instruction sets comprises a plurality of instructions, wherein each instruction relates to a single step to be performed. Each user interface is configured for outputting instructions based on a list of instruction sets. The at least one user interface is configured for outputting the instructions via at least one of audio, text and video. Each user interface is configured for outputting the instructions based on the actions of the user, particularly wherein each user interface is configured for outputting an instruction of an instruction set only after detecting an execution of a preceding instruction. The present invention also relates to a corresponding method and to a corresponding computer program product.

## Description

The present invention relates to the field of food and beverage preparation and gastronomy operation. In particular, the present invention relates to providing users instructions and feedback in food and/or beverage preparation as well as to determine adherence of the users.

In the last years, a change in the demand in commercial food preparation has been seen. In particular, food and beverages tend to become successively more complex and more individualized, as individual options and modifications to dishes and drinks become fashionable. Thus, increased efforts for training of employees is required. Also, more complex preparation processes bear a higher risk for errors than more simple processes or processes with fewer choices or individual modifications. On the other hand, there is a need for more efficient operation of commercial kitchens due to cost and shortage in correspondingly qualified workers.

Additionally, (partially) automated kitchen equipment needs to be integrated in mainly manual workflows so as to increase an overall efficiency of the operation of a commercial kitchen.

Further, as businesses in gastronomy develop more and more towards restaurant chains and system catering, a centrally steered management of the preparation of food and/or beverages at local kitchens/restaurants of a system become necessary. For example, a reproducible client-experience may be desirable in this context.

Also, changes in nutritional habits are occurring rapidly in the more recent past and will - with new ingredients and new demands, e.g., for vegan food - continue to develop more and more rapid. This does again require more frequent and more efficient training of employees and management of the preparation process to manage errors in preparation. It may be advantageous to control this accelerating change centrally while the execution of the service is happening locally. To ensure that employees can implement the changes there is a need to provide information regarding the changes just in time, i.e., the right information to the right people in the right quantity at the right time and at the right location.

In a centralized value chain, as can e.g. be found in today's manufacturing operations, operations are usually centrally organized and standardized, and are carried out in a very structured manager to ensure a very high level of quality, and reproducibility even in plants with hundreds, if not thousands of employees.

The restaurant industry is a decentral value chain. It is common to accept a much lower level of reproducibility and higher fluctuations in quality than in manufacturing. One more reason for this occurrence is that the employees in the food service industry, particular in kitchens, often lack prior qualification in the field. Additionally, they are often not fluent in the local language, rendering communication with trainers or supervisors more difficult.

WO 2018/165038 A1 teaches a food preparation system configured to enhance the efficiency of food preparation operations in a commercial kitchen by displaying instructions on a surface in the kitchen work area. The food preparation system includes a plurality of cameras aimed at a kitchen workspace for preparing the plurality of food items and a processor operable to compute an instruction for a kitchen worker to perform a food preparation step based on one or more types of information selected from order information, recipe information, kitchen equipment information, data from the cameras, and food item inventory information. A projector in communication with the processor visually projects the instruction onto a location in the kitchen workspace for the kitchen worker to observe. Related methods for projecting food preparation instructions are described.

US 20200249660 A1 teaches an integrated front-of-house and back-of-house restaurant operations system which integrates automated and manual restaurant operations into an order-based system. The system interfaces with disparate devices and systems to provide order-based monitoring and control of operations within an establishment.

The prior art does however not discuss how user instructions are generated, how a quality of the preparation process or the execution of instructions by the user can be monitored or how a plurality of tasks can be handled.

While the prior art approaches may be satisfactory in some regards, they have certain shortcomings and disadvantages.

It is therefore an object of the invention to overcome or at least alleviate the shortcomings and disadvantages of the prior art. More particularly, it is an object of the present invention to provide a method and system for providing user instructions in food and/or beverage preparation.

It is an optional objective of the present invention to provide a method and system for determining errors in the execution of food and/or beverage preparation instructions by the user.

Further, it is an optional objective of the present invention to provide a method and system for providing improved user instructions based on user behavior.

Further it is an optional objective of the present invention to provide a method and system for comparing an execution of a process by different users, particularly different users at different locations.

It is another optional objective to provide a method and system for optimized scheduling of tasks based on capacity restrictions, requests and user competencies.

In a first embodiment, a system is disclosed. Also disclosed are a method and a computer program product. Advantages and details discussed in the context of the system may respectively apply also in the context of the method as well as the computer program product.

The system comprises a data-processing system comprising a data-storage component configured for storing a plurality of instruction sets. The system further comprises at least one or a plurality of user interface(s) configured for outputting data.

The user interface(s) may for examples comprise at least one of AR (Augmented Reality) glasses and VR (Virtual Reality) glasses. Thus, optionally advantageously, information may be provided to an individual user and further, the individual user's field of vision may be sensed by the interface(s).

In some embodiments, the user interface(s) may comprise monitors and/or screens, in other embodiments, the user interface(s) may not comprise such monitors and/or screens.

The user interface(s) may be wearable.

The system comprises at least one sensor. The sensor may for example be selected from accelerometer sensors, inertial measurement units and GPS sensors.

The at least one sensor may be configured for detecting at least one action of a user, particularly a plurality of actions of a plurality of users.

The system may be configured for detecting the at least one action by processing data generated by the at least one sensor using a data-processing algorithm.

Said detecting may for example be performed by an algorithm such as Convolutional Neural Networks (CNN), Support Vector Machines (SVMs) or Kalman Filters. In case of sensors generating image data, for example, algorithms such as convolutional neural networks (CNN) or optical flow algorithms to detect the movements or object detection algorithms such as Haar cascades, Faster R-CNNs, YOLO, Mask R-CNN or Colour-based segmentation to detect the objects and their properties may be used.

The at least one action may comprise at least one movement of the user(s). Particularly, each action of the user(s) comprises a movement of the user(s).

At least one of the at least one user interface may further be configured for detecting actions of a user using the at least one user interface.

At least one of the user interface(s) may comprise a camera configured for detecting at least one of (a) actions of the user and (b) objects in front of the user. At least one sensor may comprise the camera. In other words, at least one sensor may be a camera.

The at least one sensor for detecting actions of the user may comprise at least one camera installed in a kitchen.

At least one of the user interface(s) may comprise a movement sensor configured to be worn at a hand of the user, wherein the at least one sensor configured for detecting actions of the user comprises the movement sensor.

The movement sensor may comprise at least one of an accelerometer sensor, an inertial measurement unit and a GPS sensor.

At least one of the user interface(s) may comprise a microphone. The at least one sensor configured for detecting actions of the user may comprises the movement sensor. The user interface may comprise a headset comprising the microphone

At least one of the instruction sets or each instruction set may comprise a plurality of instructions. Each instruction may relate to a single step to be performed, such as frying, cutting, cooking, or arranging on a plate.

The instruction sets may relate to food preparation, e.g., to the preparation of a dish or preparatory works in a kitchen or supporting activities. The preparatory works may for example comprise cutting ingredients, washing ingredients, prepacking and/or pre-portioning ingredients. The supporting activities may for example comprise cleaning activities, setting-up or setting-down the workspace and/or filling in stocks.

Each instruction may comprise an indication of a kitchen equipment to be used for the step, i.e., a kitchen equipment to be used for the step specified by the instruction.

In other words, each instruction set may correspond to a standard for an operation, such as a standard for preparation of a dish or a beverage.

The at least one user interface may be configured for outputting instructions based on a list of instruction sets.

Each user interface may be configured for outputting instructions based on the list of instruction sets.

The data-storage component may be configured for storing instruction-output data comprising output data elements. Each output data element corresponds to at least one instruction.

Each user interface may be configured for outputting the instructions based on the actions of the user. Particularly, each user interface may be configured for outputting an instruction of an instruction set only after detecting an execution of a preceding instruction.

The at least one user interface may be configured for outputting the instructions via at least one of audio, text and video.

The at least one user interface(s) comprise AR glasses. The at least one user interfaces may be configured for outputting instructions as an information overlay, e.g., a video overlay.

The data-processing system may be configured for determining steps of different selected instruction sets that can be performed in parallel by a user and for outputting said steps in a combined manner, e.g., an instruction to put several burger patties for different burgers on a grill.

The system may be configured for outputting different instructions of a same instruction set to different users.

The system may be configured for outputting the different instructions to the different users based on a kitchen equipment that the users are respectively operating.

The at least one user interface may be configured for outputting instructions that are to be performed in parallel.

The at least one user interface may be configured for outputting an indication of a remaining duration of a step corresponding to an instruction, such as a timer relating to a step.

Outputting the indication of the remaining duration of the step corresponding to the instruction may be based on detecting a beginning of an execution of an instruction.

At least one of the output data elements may relate to an execution of a pre-determined section of a movement corresponding to the output data element.

Such pre-determined sections of the movement and the corresponding output data elements may for example be
(a) take the chopped lattice with three fingers (a visualisation of the gesture being contained in the corresponding output data element), and/or
(b) when turning your burger patty on the grill use the grill scraper (an illustration of the scraper being contained in the corresponding output data element) in a 45° angle (a visualisation of the angle being contained in the corresponding output data element).

The pre-determined sections of the movement may also be referred to as key points of the movement.

The at least one output data element relating to the execution of the pre-determined section of the movement corresponding to the output data element may further comprise an indication of an effect of the pre-determined section of the movement.

For example, in continuation of the above example, an effect of the pre-determined section (a) may be that thus, it may be ensured that the right quantity of the ingredient is used. An effect of the pre-determined section (b) may be that thus, it may be ensured that roasting flavours stick to the burger patty instead of sticking to the grill.

The data-processing system may be configured for comparing a detected action of a user and/or a recognized object to an instruction outputted to the user and for determining an execution quality based on a difference between the outputted instruction and the detected action and/or object.

The execution quality may relate to a congruence of the outputted instruction and the action and/or the recognized object, e.g., a precision or a fluidity of a movement. In other words, the execution quality may for example be an indication of a deviation of an execution from a standard to which the instruction or an instruction set correspond.

Thus, optionally advantageously, an execution of an instruction by a user can be monitored objectively. Further, deviations from the instruction or instruction set may optionally advantageously be detected and deviations in a produced food or beverage may optionally advantageously be anticipated.

The outputted instruction may relate to at least one of an action, at least one object, at least one process time and at least one object property like a colour or a handling detail. Thus, optionally advantageously, the instruction may relate to a feature that can be automatically monitored by the system.

The detected action may comprise an interaction with an object.

Determining the execution quality may comprise determining a difference between a detected filling level of at least one container and the outputted instruction. For example, determining the execution quality may comprise determining whether a pot is sufficiently filled with liquids.

Determining the execution quality may comprise determining a difference between a detected property of at least one ingredient and the outputted instruction. For example, determining the execution quality may comprise determining whether bread or meat is sufficiently roasted, whether vegetables are sufficiently green and fresh, and/or whether an omelette sufficiently cooked.

Thus, optionally advantageously, a deviation from a desired state of the food and/or the beverage may be detected. Also, optionally advantageously, reproducibility of the food preparation process may be increased.

Determining the execution quality may comprise determining a difference between at least one handling detail and the outputted instruction. For example, the system may be configured for determining whether a piece of bread or meat was removed from a grill using the above-mentioned correct angle of the scraper. In another example, the system may be configured for determining whether a correct tool or helping device was used and/or whether an action was performed with a correct velocity.

Thus, optionally advantageously, process parameters impacting a result of the food preparation process and deviations of these parameters may be determined and reproducibility of the food preparation process may be increased.

Determining the execution quality may comprise determining a difference between an intersection of objects and/or ingredients and the outputted instruction.

In other words, an overlay between ingredients may be determined. For example, the system may be configured for determining whether a tomato slice and a burger patty are placed centrally on a burger bun, whether salami slices are equally distributed over a pizza, whether a pizza correctly positioned in the oven, whether a decor is correctly positioned on a plate and/or whether a correct packaging box is used the corresponding type of burgers.

Thus, optionally advantageously, process parameters impacting a result of the food preparation process and deviations of these parameters may be determined and reproducibility of the food preparation process may be increased.

Determining the execution quality may comprise determining a difference between at least one of a detected dimension of an object, a detected colour of an object and a detected property of an object and the outputted instruction. The outputted instruction may comprise an indication relation to the at least one of the dimension of the object, the detected colour of the object and the detected property of the object.

The data-processing system may be configured for processing the execution quality of a plurality of instructions executed by a same user and for determining a skill level of said user based thereon.

In other words, a divergence between certain instructions or types of instructions and the execution of the instructions by the user may be determined. Thus, optionally advantageously, automated selection of appropriate instructions by the system may be facilitated.

The system may be configured for outputting data to the user based on the list of instruction sets and the execution quality, particularly the skill level, of said user.

The data-processing system may be configured for determining an output data element for an instruction to be outputted to a user based on the execution quality, particularly the skill level, of said user.

For example, a user with a basic or low skill level may receive basic information to allow completing the task, while higher skill users are receiving additional information to allow completing the tasks at highest possible quality, or allowing to complete more tasks in parallel, or by providing additional background information. The user may thus be seamlessly trained and educated on the job with the objective to keep the user in flow and learning to naturally achieve the highest possible qualification level such as a chef or master trainer himself.

The system, particularly the at least one user interface, may be configured for repeating outputting an output data element based on the execution quality determined for the detected action. In other words, the system may be configured for repeating an instruction inf a detected execution quality is below a threshold, such as a pre-determined threshold.

The difference between the output instruction and the detected action may comprise a difference of an execution time of the outputted instruction and a time associated with the instruction or instruction set.

The difference between the outputted instruction and the detected action may comprise different levels of deviation of an execution time of the outputted instruction.

Determining the steps of the different selected instruction sets that can be performed in parallel by the user may be based on the execution quality determined for a user, particularly on the skill level of the user.

The output may be shown by means of a colour code. In other words, the system may be configured for outputting the output by means of a colour code. The output data may comprise said colour code.

For example, the system may be configured for outputting a green/orange/red traffic light and/or a colour scale. Further, the system may, e.g., be configured for outputting additional instructions how to proceed with the colour-coded information.

For example, a green light may relate to getting reward and provide motivation for the user to keep going. In said example, a yellow light may be outputted together with an output of potential measures to correct a detected deviation. (E.g., "control temperature of the oven or the cooling compartment", "use key handling point correctly", "remember to position the 6 salami slices at "full hours of 2,4,5,8,10 and 12" while imagining the pizza being a clock"). These measures may be shown in process or afterwards. With continued reference to said example, a red light may indicate to stop and redo the process, call manager, and/or take other steps to ensure the required quality.

The system may be configured for obtaining a plurality of reference points from a recorded data set generated by a user wearing the wearable user interface, particularly AR glasses.

In this case, the user may e.g. be a master trainer. In other words, the system may be configured for obtaining the reference points from a master trainer wearing the wearable user interface.

A user such as the master trainer may perform wrong actions or most common errors with purpose to indicate to the system in which cases the quality does not match the requirements. Alternatively or additionally, a supervised learning set-up may be created, where a first group of users are observed and different levels of execution quality are tagged to the different traffic light colours.

The data-processing system may be configured for receiving order data. The order data may indicate a plurality of orders.

The data-processing system may be configured for generating the list of instruction sets based on the order data and the stored instruction sets. The list of instruction sets may comprise several instruction sets. Each instruction set may correspond to an order.

However, an order may correspond to a plurality of instruction sets, e.g., an order may comprise a dish and a drink or a plurality of dishes for a table, while each of the instruction sets may only relate to one food preparation process.

The order data may further indicate for at least one order a modification. The data-processing system may be configured for modifying a respective instruction set of the list of instruction sets.

The list of instruction sets may be ordered. In other words, the items on the list may be arranged in an order.

The data-processing system may be configured for modifying the order of the list of instruction sets based on order input data received from a user, such as a customer or a waitress/waiter, and/or a category associated with an instruction set. For example, the order input data may relate to a lost order and/or a wrongly prepared dish.

The data-processing system may be configured for associating a category to an instruction set based on an estimated execution time of the instruction set.

The data-processing system may be configured for receiving the order data from at least one of an electronic point of service system and a software application on an end-user computer device. The software application on the end-user computer device may for example be configured for displaying a digital menu and/or at least one order for takeaway.

The data-processing system may be configured for determining an expected waiting time for orders based on the list of instruction sets.

Determining the expected waiting time may be based on the determined skill level of at least one present user.

The system may be configured for determining the expected waiting time for each of a plurality of products. The determining may be performed by means of backwards planning.

The determining may be based on a free equipment capacity and the time associated with the respective instruction set, such as a sum of user handling and/or equipment operation time(s).

The time associated with the respective instruction set may be modified based on the skill level of the at least one present user. Hence, optionally advantageously, an improved estimation of the wating time can be provided in an automated manner.

The determining of the expected waiting time for orders may be based on the Critical Path Method (CPM) and/or a heuristic and/or solution strategy for of the Resource-Constrained Project Scheduling Problem (RCPSP).

Such solution strategies may for example comprise Branch and bound algorithms, Genetic algorithms, Simulated annealing, Ant colony optimization, Particle swarm optimization, and/or an implementation of the Critical path method (CPM) combined with heuristics.

Determining the expected waiting time may further be based on the indications of the kitchen equipment to the instructions comprise.

The data-processing system may be configured for transmitting the expected waiting time to at least one of the electronic point of service system and the software application on the end-user computer device.

This might e.g. be used to influence and steer demand towards free equipment capacity. For example, the waiting time for a pizza in a restaurant may amount to 20min, while the waiting time for a salad may amount to 5min and for a pasta dish to 10min. In this example, displaying the waiting times to customer during lunch hours on handhelds or self-order terminals may result in increasing demand for salads and pasta while decreasing demand for pizza resulting in higher throughput, employee state of flow and shorter waiting times for customers. It will be understood that this will typically also result in resources (e.g., kitchen equipment) being more uniformly and therefore more efficiently used.

The data-processing system may be configured for sending offer data, such as menu offer data, to the at least one of the electronic point of service system and the software application. The offer data may comprise information relating to available dishes and/or drinks.

The offer data may comprise an order of the available dishes and/or drinks.

The data-processing system may be configured for modifying the order of the available dishes and/or drinks in response to the expected waiting time exceeding a maximum threshold or falling below a minimum threshold.

Modifying the order of the available dishes and/or drinks may further be based on historic data relating to placed orders and the execution times associated with the instructions corresponding to a dish and/or drink, e.g., by means of extrapolation the historic data. Thus, optionally advantageously, an influence of the expected additional incoming orders on the expected waiting times may be determined.

Modifying the order of the available dishes and/or drinks may further based on a periodic simulation based on the historic data relating to placed orders and the execution times, particularly wherein the simulation is based on the historic data.

The data-processing system may be configured for sending a notification to further users, e.g. an offer to work. Thus, optionally, a capacity during the shift may be increased, and thus increasing output or reducing expected waiting times

The data-processing system may further be configured for determining a bonus wage for users, such as employed users, that are off-duty based on a profit generated by additional users present in the kitchen. Said users that are off-duty may for example be users who decide to join the team in a current shift on a short notice.

The data-processing system may be configured for adding additional instruction sets to the list of instruction sets if the expected waiting time falls below a minimum threshold. In this embodiment, said additional instruction sets do not relate to a customer order, but are, e.g., instruction sets relating to supporting activities or preparatory work.

The data-processing system may further be configured for sending a notification to present users, allocating the users to different tasks and/or offering the possibility to leave the work space earlier.

The system may be configured for detecting a stock of ingredients and for modifying the offer data, particularly the menu offer data, based thereon.

Thus, optionally advantageously, the system may detect empty bins, signal to refill these and delist dishes requiring said ingredient until it is refilled, providing for an improved customer experience.

For example, if the user indicates that the stock is empty, the user may be asked to confirm that this ingredient is not available. The system may be configured for deciding, e.g., based on a rank of the ingredient, not to list a product or inform that certain ingredients are out of stock with the goal to avoid misunderstandings and negative surprises. A master trainer can rank the ingredients and their relevance for foods and/or beverages: e.g., if the restaurant has no avocado on stock, this will be displayed in all dishes where avocado is one of several ingredients or an add-on, while an avocado burger and avocado salad may temporarily be delisted, i.e., taken from the menu, as this is a key ingredient.

Each instruction set may comprise an indication of at least one necessary ingredient. The system may be configured for not including corresponding foods and/or beverages in the menu offer data whose ingredients, particularly necessary ingredients, are out of stock.

At least one instruction set may comprises an indication of at least one optional ingredient. The system may be configured for generating a notification for the corresponding dish and/or drink, e.g., based on the detected stock of ingredients.

At least one of the instructions may comprise an indication of an electronically controlled kitchen equipment. The system may be configured for sending equipment control data to the electronically controlled kitchen equipment based on the respective instruction.

The equipment control data may indicate an operation of the kitchen equipment.

The system may be configured for receiving modified instruction sets and for modifying instructions of the plurality of instruction sets stored at the data-storage component accordingly.

Modifying the instructions may e.g. comprise replacing, storing additional and/or updating instructions. For example, a modified instruction may be adapted in view of different baking times in different ovens due to changes oven temperatures or changed oven models or due to changed supplier for dough pieces.

The data-storage component may be configured for storing instruction-modification data, which instruction-modification data indicate modifications to instructions sets.

Each user interface may be configured for outputting modification warning data when outputting the modified instructions, particularly based on the instruction modification data.

Thus, optionally advantageously, a cognitive charge for the user to notice the modifications may be reduced.

For example, an information relating to the modification may be outputted to users who are exposed to them at the time, when this information is relevant confirmed by execution this information and thus better retain the instruction-modification data.

The data-processing system may be configured for determining the execution quality for the modified instructions and for determining whether modification warning data are output based on the respective execution quality, particularly further based on historic execution quality data in response to modifications of instructions.

For example, based on the execution quality relating to a modified instruction, modification warnings may not be outputted to a certain user when this user has conducted the task in a correct time frame or sufficiently often.

The system may be configured for providing a virtual environment mode. In the virtual environment mode, instructions of an instruction set as well as corresponding kitchen equipment may be outputted via the at least one user interface.

In the virtual environment mode, the at least one user interface may be configured for modifying the output in response to a virtual interaction of a user with an output kitchen equipment.

The data-processing system may be configured for generating a new instruction set. Generating the new instruction set may comprise
- recording a preparation process performed by a at least one user by means of the sensor configured for detecting actions of the user,
- determining single steps of the preparation process based on the recording of the preparation process,
- determining kitchen equipment used for each single step,
- generating instructions corresponding to the single steps, and
- generating the instruction set based on the instructions.

Generating the new instruction set may correspond to defining a new standard for a food preparation process.

The recording may comprise video data. The data-processing system may be configured for processing the video data by means of an image recognition algorithm so as to determine the single steps.

Recording the preparation process performed by the at least one user may in particular by recording the preparation process performed by at least one master user.

The at least one master user may be a plurality of master users. The system may be configured for receiving a plurality of recordings from the master users. Thus, optionally advantageously, increased error-tolerance with respect to each single recording may be achieved.

At least two master users may record the preparation process at different locations. In other words, the system may be configured for processing recordings of the preparation process which were generated at different locations.

Generating the instructions may further comprise receiving at least one indication of at least one pre-determined section of a movement of the preparation process. The pre-determined section of the movement of the preparation process may be a key point, as discussed above.

The system may be configured for receiving the at least one indication from at least one of the master user(s).

Generating the instructions may further comprise receiving explanations and/or input data relating to said pre-determined section of the movement and further generation at least one element of output data based thereon.

Determining kitchen equipment used for each single step may comprise at least one of receiving manually generated indications of corresponding equipment and using video analysis algorithms, such as computer vision algorithms as discussed above.

Generating the new instruction set may comprise recording the preparation process performed by a same user several times.

At least one of the recorded may relate to a purposeful wrong conduction of the preparation process and an indication of whether a result of the process is acceptable or not.

The system may be configured for receiving said indication from at least one of the master users.

The recording may further comprise recording audio data.

Generating the new instruction set may further comprise
- outputting the generated instruction set to the user,
- receiving modification data from the user, and
- modifying the generated instruction set accordingly.

The data-processing system may further be configured for determining an execution time for the generated instructions.

The data-processing system may be configured for retrieving execution times for the generated instructions from an instruction data base.

The data-processing system may further be configured for receiving audio data and generating output data elements based on the received audio data.

Generating the new instruction set may further comprise generating instruction-output data corresponding to the new instruction set.

Generating the new instruction set may further comprise outputting the instructions in at least one of a kitchen and simulated environment.

Generating the new instruction set may comprise outputting the instruction set together with other instruction sets whose steps can be performed in parallel.

The system may further be configured for outputting the new instruction set to at least one user in a kitchen several times and determining a development of the execution quality of the steps of the new instruction set based thereon.

Determining the development of the execution quality may comprise determining a development of at least one of the execution time, a movement velocity and a fluidity of manual tasks. The fluidity may also be referred to as smoothness of movements belonging to the manual tasks.

The system may be configured for outputting the new instruction set to a plurality of users in a kitchen several times and determining the development of the execution quality of the steps of the new instruction set based thereon, particularly an execution quality of manual tasks.

The system may be configured for determining differences between the development of the execution quality of different users and outputting data based thereon.

The system may be configured for determining a learning speed of a user and/or a group of users based on the development of the execution quality of said user(s), particularly the at least one of the execution time, the movement velocity and the fluidity of the manual tasks.

Generating the new instruction set may comprise storing the new instruction set by the data-storage component. In other words, the data-storage component may be configured for storing the new instruction set.

The data-processing system may be configured for sending the new instruction set to another data-processing system.

Generating the new instruction set may further comprise receiving kitchen-modification data from a user specifying modifications for a different kitchen.

The modifications for the different kitchen may relate to differences between a first and a second kitchen, e.g., a first kitchen to which the instruction set relates, and a second kitchen, where the instruction set is to be performed by a user.

The data-processing system may be configured for only performing modifications indicated by the kitchen-modification data upon confirmation of a user, such as a standard master.

The system may be configured for sending the new instruction set to the other data-processing system after applying the kitchen-modification data.

The data-processing system may be configured for determining the execution quality for at least one newly generated instruction set.

The data-processing system may be configured for outputting the execution quality for the at least one newly generated instruction set.

The execution quality for the at least one newly generated instruction set may be determined by an algorithm processing a plurality of individual execution qualities relating to said instruction set. These algorithms may for example be selected from include regression analysis, time series analysis, clustering and/or decision tree analysis.

The data-processing system may be configured for outputting at least one instruction of the at least one newly generated instruction set based on the execution quality, such as an execution quality below a pre-determined threshold, and for outputting the difference between the outputted instruction and the detected action.

The data-processing system may be configured for receiving modification data from the user in response to the outputted difference between the outputted instruction and the detected action, and for modifying the at least one instruction set accordingly.

The received modification data may comprise receiving an indication to either modify the instruction based on the outputted difference or to not modify the instruction data.

The data-processing system may be configured for sending at least one of the received modification data and the at one modified instruction set to the other data-processing system.

The camera of the at least one user interface may be an overhead camera.

The at least one user interface may be a plurality of user interfaces.

The data-processing system may comprise a data transmission component configured for sending to and/or receiving data from at least one automated kitchen equipment. The automated kitchen equipment may be configured for performing at least one operation automatically. The system may comprise the at least one automated kitchen equipment.

The data-processing system may be configured for sending at least one instruction to the at least one kitchen equipment, particularly based on the instruction's indication of the kitchen equipment to be used for the step.

The system may be a system for supporting food and/or beverage preparation.

The system may be a system for supporting food and/or beverage preparation in gastronomy and/or a kitchen.

In a second embodiment, a method is disclosed.

The method comprises storing the plurality of instruction sets by means of the data-processing system comprising the data-storage component, and outputting the data by means of the at least one or the plurality of user interface(s).

The user interface(s) may be wearable.

The method may comprise detecting the at least one action of the user, particularly the plurality of actions of a plurality of users.

The method may comprise performing the detecting by means of the at least one sensor.

The method may comprise detecting the at least one action comprises processing data generated by the at least one sensor using the data-processing algorithm.

The at least one action may comprise the at least one movement of the user(s). Each action of the user(s) may comprise a movement of the user(s).

The method may comprise detecting the at least one action of the user by means of the user interface(s), particularly by means of the respective wearable user interface which interface the user wears.

At least one of user interface(s) may comprise the camera. The method may comprise detecting at least one of (a) the actions of the user and (b) objects in front of the user. The at least one sensor may comprise the camera.

The at least one sensor for detecting actions of the user may comprise at least one camera installed in the kitchen.

At least one of user interface(s) may comprise the movement sensor. The method may comprise the user wearing the movement sensor at the hand of the user. The method may comprise detecting actions of the user by means of the movement sensor.

At least one of the user interface(s) may comprises the microphone. The at least one sensor may comprise the movement sensor. The user interface may comprise a headset comprising the microphone.

At least one of the instruction sets or each instruction set may comprise a plurality of instructions. Each instruction may relate to a single step to be performed, such as frying, cutting, cooking, or arranging on a plate.

The instruction sets may relate to food preparation, e.g., to the preparation of a dish or preparatory works in a kitchen or supporting activities. The preparatory works may for example comprise cutting ingredients, washing ingredients, prepacking and/or pre-portioning ingredients.

Each instruction may comprise an indication of the kitchen equipment to be used for the step.

The method may comprise outputting instructions based on the list of instruction sets by means of at least one of the user interface(s).

The method may comprise each user interface outputting instructions based on the list of instruction sets.

The method may comprise storing instruction-output data comprising output data elements. Each output data element may correspond to at least one instruction. The data-storage component may store the instruction-output data.

The method may comprise each user interface outputting the instructions based on the actions of the user. The method may comprise each user interface outputting an instruction of an instruction set only after detecting an execution of a preceding instruction.

The method may comprise the at least one user interface outputting the instructions via at least one of audio, text and video.

The at least one user interface(s) may comprise AR glasses. The at least one user interface(s) may be configured for outputting instructions as an information overlay, e.g., a video overlay.

The method may comprise the data-processing system determining steps of different selected instruction sets that can be performed in parallel by a user. The method may further comprise outputting said steps in a combined manner, e.g., an instruction to put several burger patties for different burgers on a grill.

The method may comprise outputting different instructions of a same instruction set to different users.

The method may comprise outputting the different instructions to the different users based on a kitchen equipment that the users are respectively operating.

The method may comprise at least one user interface outputting instructions that are to be performed in parallel.

The method may comprise the at least one user interface outputting an indication of a remaining duration of a step corresponding to an instruction, such as a timer relating to a step.

Outputting the indication of the remaining duration of the step corresponding to the instruction may be based on detecting a beginning of an execution of an instruction.

At least one of the output data elements may relate to an execution of a pre-determined section of a movement corresponding to the output data element.

The at least one output data element relating to the execution of the pre-determined section of the movement corresponding to the output data element may further comprise an indication of an effect of the pre-determined section of the movement.

The method may comprise the data-processing system comparing a detected action of a user and/or a recognized object to an instruction outputted to the user. The method may further comprise the data-processing system determining the execution quality based on the difference between the outputted instruction and the detected action and/or object.

The outputted instruction may relate to at least one of an action, at least one object, at least one process time and at least one object property like a colour or a handling detail.

The detected action comprises an interaction with an object.

Determining the execution quality may comprise determining the difference between the detected filling level of at least one container and the outputted instruction.

Determining the execution quality may comprise determining the difference between the detected property of at least one ingredient and the outputted instruction.

Determining the execution quality may comprise determining the difference between at least one handling detail and the outputted instruction.

Determining the execution quality may comprise determining the difference between the intersection of objects and/or ingredients and the outputted instruction.

Determining the execution quality may comprise determining the difference between at least one of the detected dimension of an object, the detected colour of an object and the detected property of an object and the outputted instruction. The outputted instruction comprises an indication relation to the at least one of the dimension of the object, the detected colour of the object and the detected property of the object.

The method may comprise the data-processing system processing the execution quality of the plurality of instructions executed by the same user and the data-processing system further determining the skill level of said user based thereon.

The method may comprise outputting data to the user based on the list of instruction sets and the execution quality, particularly the skill level, of said user.

The method may comprise the data-processing system determining the output data element for the instruction to be outputted to the user based on the execution quality, particularly the skill level, of said user.

The method may comprise repeating outputting an output data element based on the execution quality determined for the detected action. In particular, the repeated outputting may be performed by the at least one user interface.

The difference between the output instruction and the detected action may comprise the difference of the execution time of the outputted instruction and the time associated with the instruction or instruction set.

The difference between the outputted instruction and the detected action may comprise different levels of deviation of an execution time of the outputted instruction.

Determining the steps of the different selected instruction sets that can be performed in parallel by the user may be based on the execution quality determined for a user, particularly on the skill level of the user.

The method may comprise showing the output by means of the colour code.

The method may comprise obtaining the plurality of reference points from the recorded data set generated by a user wearing the wearable user interface, particularly AR glasses.

The method may comprise the data-processing system receiving order data. The order data may indicate a plurality of orders.

The method may comprise the data-processing system generating the list of instruction sets based on the order data and the stored instruction sets. The list of instruction sets may comprise several instruction sets. Each instruction set may correspond to an order.

The order data may further indicate for at least one order a modification. The method may comprise the data-processing system modifying a respective instruction set of the list of instruction sets.

The list of instruction sets may be ordered, i.e., items on the list may be arranged in an order.

The method may comprise the data-processing system modifying the order of the list of instruction sets based on order input data received from the user, such as a customer or a waitress/waiter, and/or a category associated with an instruction set.

The method may comprise the data-processing system associating the category to an instruction set based on the estimated execution time of the instruction set.

The method may comprise the data-processing system receiving the order data from at least one of the electronic point of service system and the software application on the end-user computer device.

The method may comprise the data-processing system determining an expected waiting time for orders based on the list of instruction sets.

Determining the expected waiting time may further be based on the determined skill level of at least one present user.

The method may further comprise determining the expected waiting time for each of the plurality of products. The determining may be based on the free equipment capacity and the time associated with the respective instruction set.

The time associated with the respective instruction set may be modified based on the skill level of the at least one present user.

The determining of the expected waiting for orders may be based on at least one of the Critical Path Method (CPM) and a heuristic and/or a solution strategy for of the Resource-Constrained Project Scheduling Problem (RCPSP), such as Branch and bound algorithms, Genetic algorithms, Simulated annealing, Ant colony optimization, Particle swarm optimization, and/or Critical path method (CPM) combined with heuristics.

Determining the expected waiting time may further be based on the indications of the kitchen equipment to the instructions comprise.

The method may comprise the data-processing system transmitting the expected waiting time to at least one of the electronic point of service system and the software application on the end-user computer device.

The method may comprise the data-processing system sending the offer data, such as menu offer data, to the at least one of the electronic point of service system and the software application. The offer data may comprise information relating to the available dishes and/or drinks.

The offer data may comprise the order of the available dishes and/or drinks.

The method may comprise the data-processing system modifying the order of the available dishes and/or drinks in response to the expected waiting time exceeding the maximum threshold or falling below the minimum threshold.

Modifying the order of the available dishes and/or drinks may further be based on historic data relating to placed orders and the execution times associated with the instructions corresponding to a dish and/or drink, e.g., by means of extrapolation from the historic data.

The order of the available dishes and/or drinks may further be based on the periodic simulation based on the historic data relating to placed orders and the execution times. The simulation may be based on the historic data.

The method may comprise the data-processing system sending the notification to further users, e.g., the offer to work.

The method may comprise the data-processing system further determining the bonus wage for users that are off-duty based on a profit generated by additional users present in the kitchen.

The method may comprise the data-processing system adding additional instruction sets to the list of instruction sets if the expected waiting time falls below the minimum threshold. The additional instruction sets may not relate to the customer order, e.g., instruction sets may relate to supporting activities or preparatory work.

The method may comprise the data-processing system sending the notification to present users, allocating the users to different tasks and/or offering the possibility to leave the work space earlier.

The method may comprise the system detecting the stock of the ingredients. The method may further comprise modifying the offer data, particularly the menu offer data, based thereon.

Each instruction set may comprise an indication of the at least one necessary ingredient. The method may comprise not including corresponding dishes and/or drinks whose necessary ingredients are out of stock in the menu offer data.

At least one instruction set may comprise the indication of at least one optional ingredient. The method may comprise generating the notification for the corresponding dish and/or drink.

At least one of the instructions may comprise an indication of the electronically controlled kitchen equipment. The method may comprise sending the equipment control data to the electronically controlled kitchen equipment based on the respective instruction.

The equipment control data may indicate an operation of the kitchen equipment.

The method may comprise receiving modified instruction sets and modifying instructions of the plurality of instruction sets stored at the data-storage component accordingly.

The method may comprise the data-storage storing the instruction-modification data. The instruction-modification data may indicate modifications to instructions sets.

The method may comprise each user interface outputting modification warning data when outputting the modified instructions, particularly wherein the outputting is based on the instruction modification data.

The method may comprise the data-processing system determining the execution quality for the modified instructions and further determining whether modification warning data are output based on the respective execution quality. The determining may further be based on historic execution quality data in response to modifications of instructions.

The method may comprise providing the virtual environment mode. In the virtual environment mode, instructions of the instruction set as well as corresponding kitchen equipment may be outputted via the at least one user interface.

In the virtual environment mode, the method may comprise the at least one user interface modifying the output in response to a virtual interaction of a user with the output kitchen equipment.

The method may comprise the data-processing system generating the new instruction set. Generating the new instruction set may comprise
- recording a preparation process performed by a at least one user by means of the sensor configured for detecting actions of the user,
- determining single steps of the preparation process based on the recording of the preparation process,
- determining kitchen equipment used for each single step,
- generating instructions corresponding to the single steps, and
- generating the instruction set based on the instructions.

The recording may comprise video data. The method may comprise the data-processing system processing the video data by means of the image recognition algorithm so as to determine the single steps.

Recording the preparation process performed by the at least one user may be recording the preparation process performed by at least one master user.

The at least one master user may be a plurality of master users. The system may be configured for receiving the plurality of recordings from the master users.

At least two master users may record the preparation process at different locations.

Generating the instructions may further comprise receiving at least one indication of at least one pre-determined section of a movement of the preparation process.

Generating the instructions may further comprise receiving the explanations and/or the input data relating to said at least one pre-determined section of the movement, and further generation at least one element of output data based thereon.

Determining the kitchen equipment used for each single step may comprise at least one of receiving manually generated indications of corresponding equipment and the use of video analysis algorithms, such as computer vision algorithms.

Generating the new instruction set may comprise recording the preparation process performed by the same user several times.

At least one of the recordings may relate to a purposeful wrong conduction of the preparation process and an indication of whether the result of the process is acceptable or not.

The recording may further comprise recording audio data.

Generating the new instruction set may further comprise
- outputting the generated instruction set to the user,
- receiving modification data from the user, and
- modifying the generated instruction set accordingly.

The method may comprise the data-processing system determining an execution time for the generated instructions.

The method may comprise the data-processing system retrieving execution times for the generated instructions from the instruction data base.

The method may comprise the data-processing system receiving audio data and generating output data elements based on the received audio data.

Generating the new instruction set may further comprise generating the instruction-output data corresponding to the new instruction set.

Generating the new instruction set may comprise outputting the instructions in at least one of a kitchen and simulated environment.

Generating the new instruction set may comprise outputting the instruction set together with other instruction sets whose steps can be performed in parallel.

The method may comprise outputting the new instruction set to at least one user in a kitchen several times and determining the development of the execution quality of the steps of the new instruction set based thereon.

Determining the development of the execution quality may comprises determining the development of at least one of the execution time, the movement velocity and the fluidity of manual tasks.

The method may comprise outputting the new instruction set to the plurality of users in a kitchen several times and determining the development of the execution quality of the steps of the new instruction set based thereon, particularly the execution quality of manual tasks.

The method may comprise determining differences between the development of the execution quality of different users and outputting data based thereon.

The method may comprise determining the learning speed of the user and/or the group of users based on the development of the execution quality of said user(s), particularly the at least one of the execution time, the movement velocity and the fluidity of the manual tasks.

Generating the new instruction set may comprise storing the new instruction set by the data-storage component.

The method may comprise the data-processing system sending the new instruction set to the other data-processing system.

Generating the new instruction set may further comprise receiving the kitchen-modification data from a user specifying modifications for the different kitchen.

The method may comprise the data-processing system only performing modifications indicated by the kitchen-modification data upon confirmation of a user, such as a standard master.

The method may comprise sending the new instruction set to the other data-processing system after applying the kitchen-modification data.

The method may comprise the data-processing system determining the execution quality for the at least one newly generated instruction set.

The method may comprise the data-processing system outputting the execution quality for the at least one newly generated instruction set.

The method may comprise the data-processing system outputting the at least one instruction of the at least one newly generated instruction set based on the execution quality, such as an execution quality below a pre-determined threshold. The method may further comprise outputting the difference between the outputted instruction and the detected action.

The method may comprise the data-processing system receiving modification data from the user in response to the outputted difference between the outputted instruction and the detected action. The method may further comprise modifying the at least one instruction set accordingly.

The received modification data may comprise receiving the indication to either modify the instruction based on the outputted difference or to not modify the instruction data.

The method may comprise the data-processing system sending at least one of the received modification data and the at least one modified instruction set to the other data-processing system.

The camera of the at least one user interface may be the overhead camera.

The at least one user interface may be the plurality of user interfaces.

The data-processing system may comprise the data transmission component configured for sending to and/or receiving data from the at least one automated kitchen equipment. The method may comprise the automated kitchen equipment performing at least one operation automatically.

The method may comprise using the at least one automated kitchen equipment.

The method may comprise the data-processing system sending at least one instruction to the at least one kitchen equipment, particularly based on the instruction's indication of the kitchen equipment to be used for the step.

The method may be a method for supporting food and/or beverage preparation.

The method may be a method for supporting food and/or beverage preparation in gastronomy and/or a kitchen.

The system may be configured for carrying out the method according to any of the method embodiments.

In a third embodiment, a computer program product comprising instructions to cause the system perform the steps of the method is disclosed.

The following embodiments also form part of the invention.

### System embodiments

Below, embodiments of a system will be discussed. The system embodiments are abbreviated by the letter "S" followed by a number. Whenever reference is herein made to the "system embodiments", these embodiments are meant.
S1. A system, comprising
   - a data-processing system comprising a data-storage component configured for storing a plurality of instruction sets, and
   - at least one or a plurality of user interface(s) configured for outputting data.
S2. The system according to the preceding embodiment, wherein the user interface(s) are wearable.
S3. The system according to any of the preceding embodiments, wherein the system comprises at least one sensor.
S4. The system according to the preceding embodiments, wherein the at least one sensor is configured for detecting at least one action of a user, particularly a plurality of actions of a plurality of users.
S5. The system according to the preceding embodiment, wherein the system is configured for detecting the at least one action by processing data generated by the at least one sensor using a data-processing algorithm.
S6. The system according to any of the two preceding embodiments, wherein the at least one action comprises at least one movement of the user(s), particularly wherein each action of the user(s) comprises a movement of the user(s).
S7. The system according to any of the preceding embodiments with the features of S3, wherein at least one of the at least one user interface is further configured for detecting actions of a user using the at least one user interface.
S8. The system according to the preceding embodiments with the features of S3, wherein at least one of the user interface(s) comprises a camera configured for detecting at least one of (a) actions of the user and (b) objects in front of the user, and wherein the at least one sensor comprises the camera.
S9. The system according to any of the preceding embodiments with the features of S3, wherein the at least one sensor for detecting actions of the user comprises at least one camera installed in a kitchen.
S10. The system according to any of the preceding embodiments with the features of S7, wherein at least one of the user interface(s) comprises a movement sensor configured to be worn at a hand of the user, wherein the at least one sensor configured for detecting actions of the user comprises the movement sensor.
S11. The system according to any of the preceding embodiments with the features of S7, wherein at least one of the user interface(s) comprises a microphone, and wherein the at least one sensor configured for detecting actions of the user comprises the movement sensor, particularly wherein the user interface comprises a headset comprising the microphone
S12. The system according to any of the preceding embodiments, wherein at least one of the instruction sets or each instruction set comprises a plurality of instructions, wherein each instruction relates to a single step to be performed, such as frying, cutting, cooking, or arranging on a plate.
S13. The system according to any of the preceding embodiments, wherein the instruction sets relate to food preparation, e.g., to the preparation of a dish or preparatory works in a kitchen or supporting activities.
S14. The system according to any of the preceding embodiments with the features of S12, wherein each instruction comprises an indication of a kitchen equipment to be used for the step.
S15. The system according to any of the preceding embodiments, wherein the at least one user interface is configured for outputting instructions based on a list of instruction sets.
S16. The system according to the preceding embodiment and with the features of S12, wherein each user interface is configured for outputting instructions based on the list of instruction sets.
S17. The system according to any of the preceding embodiments, wherein the data-storage component is configured for storing instruction-output data comprising output data elements, wherein each output data element corresponds to at least one instruction.
S18. The system according to the preceding embodiments and with the features of S3, wherein each user interface is configured for outputting the instructions based on the actions of the user, particularly wherein each user interface is configured for outputting an instruction of an instruction set only after detecting an execution of a preceding instruction.
S19. The system according to any of the preceding embodiments with the features of S16, wherein the at least one user interface is configured for outputting the instructions via at least one of audio, text and video.
S20. The system according to the preceding embodiment, wherein the at least one user interface(s) comprise AR glasses, and wherein the at least one user interfaces is configured for outputting instructions as an information overlay, e.g., a video overlay.
S21. The system according to any of the preceding embodiments with the features of S16, wherein the data-processing system is configured for determining steps of different selected instruction sets that can be performed in parallel by a user and for outputting said steps in a combined manner, e.g., an instruction to put several burger patties for different burgers on a grill.
S22. The system according to any of the preceding embodiments with the features of S16, wherein the system is configured for outputting different instructions of a same instruction set to different users.
S23. The system according to the preceding embodiment, wherein the system is configured for outputting the different instructions to the different users based on a kitchen equipment that the users are respectively operating.
S24. The system according to any of the preceding embodiments with the features of S21, wherein the at least one user interface is configured for outputting instructions that are to be performed in parallel.
S25. The system according to any of the preceding embodiments with the features of S15, wherein the at least one user interface is configured for outputting an indication of a remaining duration of a step corresponding to an instruction, such as a timer relating to a step.
S26. The system according to the preceding embodiment, particularly with the features of S18, wherein outputting the indication of the remaining duration of the step corresponding to the instruction is based on detecting a beginning of an execution of an instruction.
S27. The system according to any of the preceding embodiments with the features of S18, wherein at least one of the output data elements relates to an execution of a pre-determined section of a movement corresponding to the output data element.
S28. The system according to the preceding embodiment, wherein the at least one output data element relating to the execution of the pre-determined section of the movement corresponding to the output data element further comprises an indication of an effect of the pre-determined section of the movement.
S29. The system according to any of the preceding embodiments and with the features of S3 and S15, wherein the data-processing system is configured for comparing a detected action of a user and/or a recognized object to an instruction outputted to the user and for determining an execution quality based on a difference between the outputted instruction and the detected action and/or object.
S30. The system according to the preceding embodiment, wherein the outputted instruction relates to at least one of an action, at least one object, at least one process time and at least one object property like a colour or a handling detail.
S31. The system according to any of the two preceding embodiments, wherein detected action comprises an interaction with an object.
S32. The system according to any of the preceding embodiments with the features of S29, wherein determining the execution quality comprises determining a difference between a detected filling level of at least one container and the outputted instruction.
S33. The system according to any of the preceding embodiments with the features of S29, wherein determining the execution quality comprises determining a difference between a detected property of at least one ingredient and the outputted instruction.
S34. The system according to any of the preceding embodiments with the features of S29, wherein determining the execution quality comprises determining a difference between at least one handling detail and the outputted instruction.
S35. The system according to any of the preceding embodiments with the features of S29, wherein determining the execution quality comprises determining a difference between an intersection of objects and/or ingredients and the outputted instruction.
S36. The system according to any of the preceding embodiments with the features of S29, wherein determining the execution quality comprises determining a difference between at least one of a detected dimension of an object, a detected colour of an object and a detected property of an object and the outputted instruction, and wherein the outputted instruction comprises an indication relation to the at least one of the dimension of the object, the detected colour of the object and the detected property of the object.
S37. The system according to any of the preceding embodiments with the features of S29, wherein the data-processing system is configured for processing the execution quality of a plurality of instructions executed by a same user and for determining a skill level of said user based thereon.
S38. The system according to any of the preceding embodiments with the features of S29, wherein the system is configured for outputting data to the user based on the list of instruction sets and the execution quality, particularly the skill level, of said user.
S39. The system according to any of the preceding embodiments with the features of S29, wherein the data-processing system is configured for determining an output data element for an instruction to be output to a user based on the execution quality, particularly the skill level, of said user.
S40. The system according to any of the preceding embodiments with the features of S29 and S17, wherein the system, particularly the at least one user interface, is configured for repeating outputting an output data element based on the execution quality determined for the detected action.
S41. The system according to any of the preceding embodiments with the features of S29, wherein the difference between the output instruction and the detected action comprises a difference of an execution time of the outputted instruction and a time associated with the instruction or instruction set.
S42. The system according to any of the preceding embodiments with the features of S29, wherein the difference between the outputted instruction and the detected action comprises different levels of deviation of an execution time of the outputted instruction.
S43. The system according to any of the preceding embodiments with the features of S29, particularly S37, and S21, wherein determining the steps of the different selected instruction sets that can be performed in parallel by the user is based on the execution quality determined for a user, particularly on the skill level of the user.
S44. The system according to any of the preceding embodiments with the features of S42, wherein the output is shown by means of a colour code.
S45. The system according to any of the preceding embodiments with the features of S42, wherein the system is configured for obtaining a plurality of reference points from a recorded data set generated by a user wearing the wearable user interface, particularly AR glasses.
S46. The system according to any of the preceding embodiments, wherein the data-processing system is configured for receiving order data, wherein the order data indicate a plurality of orders.
S47. The system according to the preceding embodiment and with the features of S15, wherein the data-processing system is configured for generating the list of instruction sets based on the order data and the stored instruction sets, wherein the list of instruction sets comprises several instruction sets, each instruction set corresponding to an order.
S48. The system according to any of the two preceding embodiments, wherein the order data further indicate for at least one order a modification, and wherein the data-processing system is configured for modifying a respective instruction set of the list of instruction sets.
S49. The system according to any of the preceding embodiments with the features of S15, wherein the list of instruction sets is ordered, i.e., items on the list are arranged in an order.
S50. The system according to the preceding embodiment and with the features of S47, wherein the data-processing system is configured for modifying the order of the list of instruction sets based on order input data received from a user, such as a customer or a waitress/waiter, and/or a category associated with an instruction set.
S51. The system according to the preceding embodiment, wherein the data-processing system is configured for associating a category to an instruction set based on an estimated execution time of the instruction set.
S52. The system according to any of the preceding embodiments with the features of S46, wherein the data-processing system is configured for receiving the order data from at least one of an electronic point of service system and a software application on an end-user computer device.
S53. The system according to any of the preceding embodiments with the features of S47, wherein the data-processing system is configured for determining an expected waiting time for orders based on the list of instruction sets.
S54. The system according to the preceding embodiment and with the features of S37, wherein determining the expected waiting time is further based on the determined skill level of at least one present user.
S55. The system according to any of the preceding embodiments with the features of S53, wherein the system is configured for determining the expected waiting time for each of a plurality of products, wherein the determining is based on a free equipment capacity and the time associated with the respective instruction set.
S56. The system according to the two preceding embodiments, wherein the time associated with the respective instruction set is modified based on the skill level of the at least one present user.
S57. The system according to any of the preceding embodiments with the features of S53, wherein the determining of the expected waiting time for orders is based on at least one of the Critical Path Method (CPM) and a heuristic and/or solution strategy for of the Resource-Constrained Project Scheduling Problem (RCPSP), such as Branch and bound algorithms, Genetic algorithms, Simulated annealing, Ant colony optimization, Particle swarm optimization, and Critical path method (CPM) combined with heuristics.
S58. The system according to any of the preceding embodiments with the features of S55 and S14, wherein determining the expected waiting time is further based on the indications of the kitchen equipment to the instructions comprise.
S59. The system according to any of the preceding embodiments and with the features of S52 and S53, wherein the data-processing system is configured for transmitting the expected waiting time to at least one of the electronic point of service system and the software application on the end-user computer device.
S60. The system according to any of the preceding embodiments with the features of S52, wherein the data-processing system is configured for sending offer data, such as menu offer data, to the at least one of the electronic point of service system and the software application, wherein the offer data comprise information relating to available dishes and/or drinks.
S61. The system according to the preceding embodiment, wherein the offer data comprise an order of the available dishes and/or drinks.
S62. The system according to any of the preceding embodiments with the features of S53 and S61, wherein the data-processing system is configured for modifying the order of the available dishes and/or drinks in response to the expected waiting time exceeding a maximum threshold or falling below a minimum threshold.
S63. The system according to the preceding embodiment, wherein modifying the order of the available dishes and/or drinks is further based on historic data relating to placed orders and the execution times associated with the instructions corresponding to a dish and/or drink, e.g., by means of extrapolation from the historic data,
   particularly wherein modifying the order of the available dishes and/or drinks is further based on a periodic simulation based on the historic data relating to placed orders and the execution times, particularly wherein the simulation is based on the historic data.
S64. The system according to any of the preceding embodiments with the features of S53, wherein the data-processing system is configured for sending a notification to further users, e.g. an offer to work.
S65. The system according to the preceding embodiment, wherein the data-processing system is further configured for determining a bonus wage for employed users that are off-duty based on a profit generated by additional users present in the kitchen.
S66. The system according to any of the preceding embodiments with the features of S62, wherein the data-processing system is configured for adding additional instruction sets to the list of instruction sets if the expected waiting time falls below a minimum threshold, wherein the additional instruction sets do not relate to a customer order, e.g. instruction sets relating to supporting activities or preparatory work.
S67. The system according to any of the preceding embodiments with the features of S62, wherein the data-processing system is further configured for sending a notification to present users, allocating the users to different tasks and/or offering the possibility to leave the work space earlier.
S68. The system according to any of the preceding embodiments with the features of S60, wherein the system is configured for detecting a stock of ingredients and for modifying the offer data, particularly the menu offer data, based thereon.
S69. The system according to the preceding embodiment, wherein each instruction set comprises an indication of at least one necessary ingredient, and wherein the system is configured for not including corresponding dishes and/or drinks whose necessary ingredients are out of stock in the menu offer data.
S70. The system according to any of the two preceding embodiments, wherein at least one instruction set comprises an indication of at least one optional ingredient, and wherein the system is configured for generating a notification for the corresponding dish and/or drink.
S71. The system according to any of the preceding embodiments with the features of S14, wherein at least one of the instructions comprises an indication of an electronically controlled kitchen equipment, and wherein the system is configured for sending equipment control data to the electronically controlled kitchen equipment based on the respective instruction.
S72. The system according to the preceding embodiment, wherein the equipment control data indicate an operation of the kitchen equipment.
S73. The system according to any of the preceding embodiments, wherein the system is configured for receiving modified instruction sets and for modifying instructions of the plurality of instruction sets stored at the data-storage component accordingly.
S74. The system according to the preceding embodiment, wherein the data-storage component is configured for storing instruction-modification data, which instruction-modification data indicate modifications to instructions sets.
S75. The system according to any of the preceding embodiments with the features of S16 and S73, wherein each user interface is configured for outputting modification warning data when outputting the modified instructions, particularly based on the instruction modification data.
S76. The system according to the preceding embodiment and with the features of S29, wherein the data-processing system is configured for determining the execution quality for the modified instructions and for determining whether modification warning data are output based on the respective execution quality, particularly further based on historic execution quality data in response to modifications of instructions.
S77. The system according to any of the preceding embodiments with the features of S12 and S20, wherein the system is configured for providing a virtual environment mode, wherein in the virtual environment mode, instructions of an instruction set as well as corresponding kitchen equipment are outputted via the at least one user interface.
S78. The system according to the preceding embodiment and with the features of S14, wherein in the virtual environment mode, the at least one user interface is configured for modifying the output in response to a virtual interaction of a user with an output kitchen equipment.
S79. The system according to any of the preceding embodiments and with the features of S3, wherein the data-processing system is configured for generating a new instruction set, wherein generating the new instruction set comprises
   - recording a preparation process performed by a at least one user by means of the sensor configured for detecting actions of the user,
   - determining single steps of the preparation process based on the recording of the preparation process,
   - determining kitchen equipment used for each single step,
   - generating instructions corresponding to the single steps, and
   - generating the instruction set based on the instructions.
S80. The system according to the preceding embodiment and with the features of S8 and/or S9, wherein the recording comprises video data, and the data-processing system is configured for processing the video data by means of an image recognition algorithm so as to determine the single steps.
S81. The system according to any of the preceding embodiments with the features of S79, wherein recording the preparation process performed by the at least one user is recording the preparation process performed by at least one master user.
S82. The system according to the preceding embodiment, wherein the at least one master user is a plurality of master users and wherein the system is configured for receiving a plurality of recordings from the master users.
S83. The system according to the preceding embodiment, wherein at least two master users record the preparation process at different locations.
S84. The system according to any of the preceding embodiments with the features of S79, wherein generating the instructions further comprises receiving at least one indication of at least one pre-determined section of a movement of the preparation process.
S85. The system according to the preceding embodiments with the features of S79, wherein generating the instructions further comprises receiving explanations and/or input data relating to said at least one pre-determined section of the movement, and further generation at least one element of output data based thereon.
S86. The system according to any of the preceding embodiments with the features of S79, wherein determining kitchen equipment used for each single step comprises at least one of receiving manually generated indications of corresponding equipment and the use of video analysis algorithms, such as computer vision algorithms.
S87. The system according to any of the embodiments with the features of S79, wherein generating the new instruction set comprises recording the preparation process performed by a same user several times.
S88. The system according to the preceding embodiment, wherein at least one of the recorded relates to a purposeful wrong conduction of the preparation process and an indication of whether a result of the process is acceptable or not.
S89. The system according to any of the preceding embodiments with the features of S79, particularly with the features of S11, wherein the recording further comprises recording audio data.
S90. The system according to any of the preceding embodiments with the features of S79, wherein generating the new instruction set further comprises
   - outputting the generated instruction set to the user,
   - receiving modification data from the user, and
   - modifying the generated instruction set accordingly.
S91. The system according to any of the preceding embodiments with the features of S79, wherein the data-processing system is further configured for determining an execution time for the generated instructions.
S92. The system according to the preceding embodiment, wherein the data-processing system is configured for retrieving execution times for the generated instructions from an instruction data base.
S93. The system according to any of the preceding embodiments with the features of S79, wherein the data-processing system is further configured for receiving audio data and generating output data elements based on the received audio data.
S94. The system according to any of the preceding embodiments with the features of S79 and S17, wherein generating the new instruction set further comprises generating instruction-output data corresponding to the new instruction set.
S95. The system according to any of the preceding embodiments with the features of S90 and S16, wherein generating the new instruction set comprises outputting the instructions in at least one of a kitchen and simulated environment.
S96. The system according to the preceding embodiment and with the features of S21, wherein generating the new instruction set comprises outputting the instruction set together with other instruction sets whose steps can be performed in parallel.
S97. The system according to any of the preceding embodiments with the features of S79 and S29, wherein the system is further configured for outputting the new instruction set to at least one user in a kitchen several times and determining a development of the execution quality of the steps of the new instruction set based thereon.
S98. The system according to the preceding embodiment, wherein determining the development of the execution quality comprises determining a development of at least one of the execution time, a movement velocity and a fluidity of manual tasks.
S99. The system according to the preceding embodiment and with the features of S37, wherein the system is configured for outputting the new instruction set to a plurality of users in a kitchen several times and determining the development of the execution quality of the steps of the new instruction set based thereon, particularly an execution quality of manual tasks.
S100. The system according to the preceding embodiment, wherein the system is configured for determining differences between the development of the execution quality of different users and outputting data based thereon.
S101. The system according to the preceding embodiment, wherein the system is configured for determining a learning speed of a user and/or a group of users based on the development of the execution quality of said user(s), particularly the at least one of the execution time, the movement velocity and the fluidity of the manual tasks.
S102. The system according to any of the preceding embodiments with the features of S79, wherein generating the new instruction set comprises storing the new instruction set by the data-storage component.
S103. The system according to the preceding embodiment, wherein the data-processing system is configured for sending the new instruction set to another data-processing system.
S104. The system according to any of the two preceding embodiments, wherein generating the new instruction set further comprises receiving kitchen-modification data from a user specifying modifications for a different kitchen.
S105. The system according to the preceding embodiment, wherein the data-processing system is configured for only performing modifications indicated by the kitchen-modification data upon confirmation of a user, such as a standard master.
S106. The system according to the preceding embodiment and with the features of S103, wherein the system is configured for sending the new instruction set to the other data-processing system after applying the kitchen-modification data.
S107. The system according to any of the preceding embodiments with the features of S79 and S29, wherein the data-processing system is configured for determining the execution quality for at least one newly generated instruction set.
S108. The system according to the preceding embodiment, wherein the data-processing system is configured for outputting the execution quality for the at least one newly generated instruction set.
S109. The system according to any of the two preceding embodiments, wherein the data-processing system is configured for outputting at least one instruction of the at least one newly generated instruction set based on the execution quality, such as an execution quality below a pre-determined threshold, and for outputting the difference between the outputted instruction and the detected action.
S110. The system according to any of the preceding embodiments with the features of S108 and particularly with the features of S90, wherein the data-processing system is configured for receiving modification data from the user in response to the outputted difference between the outputted instruction and the detected action, and for modifying the at least one instruction set accordingly.
5111. The system according to the preceding embodiment, wherein the received modification data comprises receiving an indication to either modify the instruction based on the outputted difference or to not modify the instruction data.
S112. The system according to any of the two preceding embodiments, wherein the data-processing system is configured for sending at least one of the received modification data and the at one modified instruction set to the other data-processing system.
S113. The system according to any of the preceding embodiments with the features of S8, wherein the camera of the at least one user interface is an overhead camera.
S114. The system according to any of the preceding embodiments, wherein the at least one user interface is a plurality of user interfaces.
5115. The system according to any of the preceding embodiments, wherein the data-processing system comprises a data transmission component configured for sending to and/or receiving data from at least one automated kitchen equipment,
   wherein the automated kitchen equipment is configured for performing at least one operation automatically, and
   wherein the system comprises the at least one automated kitchen equipment.
S116. The system according to the preceding embodiment, particularly with the features of S14, wherein the data-processing system is configured for sending at least one instruction to the at least one kitchen equipment, particularly based on the instruction's indication of the kitchen equipment to be used for the step.
S117. The system according to any of the preceding embodiments, wherein the system is a system for supporting food and/or beverage preparation.
S118. The system according to the preceding embodiment, wherein the system is a system for supporting food and/or beverage preparation in gastronomy and/or a kitchen.

### Method embodiments

Below, embodiments of a method will be discussed. The method embodiments are abbreviated by the letter "M" followed by a number. Whenever reference is herein made to the "method embodiments", these embodiments are meant.
M1. A method, comprising
   - storing a plurality of instruction sets by means of a data-processing system comprising a data-storage component, and
   - outputting data by means of at least one or a plurality of user interface(s).
M2. The method according to the preceding embodiment, wherein the user interface(s) are wearable.
M3. The method according to any of the preceding method embodiments, wherein the method comprises detecting at least one action of a user, particularly a plurality of actions of a plurality of users.
M4. The method according to the preceding embodiment, wherein the method comprises performing the detecting by means of at least one sensor.
M5. The method according to any of the two preceding embodiments, wherein the detecting the at least one action comprises processing data generated by the at least one sensor using a data-processing algorithm.
M6. The method according to any of the preceding method embodiments with the features of M3, wherein the at least one action comprises at least one movement of the user(s), particularly wherein each action of the user(s) comprises a movement of the user(s).
M7. The method according to any of the preceding method embodiments with the features of M3, wherein the method comprises detecting the at least one action of the user by means of the user interface(s), particularly by means of a respective wearable user interface which interface the user wears.
M8. The method according to any of the preceding method embodiments with the features of M4, wherein at least one of user interface(s) comprises a camera,
   wherein the method comprises detecting at least one of (a) actions of the user and (b) objects in front of the user, and
   wherein the at least one sensor comprises the camera.
M9. The method according to any of the preceding method embodiments with the features of M4, wherein the at least one sensor for detecting actions of the user comprises at least one camera installed in a kitchen.
M10. The method according to any of the preceding method embodiments with the features of M7, wherein at least one of user interface(s) comprises a movement sensor, particularly wherein the method comprises the user wearing the movement sensor at a hand of the user,
   wherein the method comprises detecting actions of the user by means of the movement sensor.
M11. The method according to any of the preceding method embodiments with the features of M7, wherein at least one of the user interface(s) comprises a microphone, and wherein the at least one sensor comprises the movement sensor, particularly wherein the user interface comprises a headset comprising the microphone
M12. The method according to any of the preceding method embodiments, wherein at least one of the instruction sets or each instruction set comprises a plurality of instructions,
   wherein each instruction relates to a single step to be performed, such as frying, cutting, cooking, or arranging on a plate.
M13. The method according to any of the preceding method embodiments,
   wherein the instruction sets relate to food preparation, e.g. to the preparation of a dish or preparatory works in a kitchen or supporting activities.
M14. The method according to any of the preceding method embodiments with the features of M12, wherein each instruction comprises an indication of a kitchen equipment to be used for the step.
M15. The method according to any of the preceding method embodiments, wherein the method comprises outputting instructions based on a list of instruction sets by means of at least one of the user interface(s).
M16. The method according to the preceding embodiment and with the features of M12, wherein the method comprises each user interface outputting instructions based on the list of instruction sets.
M17. The method according to any of the preceding method embodiments, wherein the method comprises storing instruction-output data comprising output data elements, wherein each output data element corresponds to at least one instruction, particularly wherein the data-storage component stores the instruction-output data.
M18. The method according to the preceding embodiments and with the features of M4, wherein the method comprises each user interface outputting the instructions based on the actions of the user, particularly wherein the method comprises each user interface outputting an instruction of an instruction set only after detecting an execution of a preceding instruction.
M19. The method according to any of the preceding method embodiments with the features of M16, wherein the method comprises the at least one user interface outputting the instructions via at least one of audio, text and video.
M20. The method according to the preceding embodiment, wherein the at least one user interface(s) comprise AR glasses, and wherein the at least one user interface(s) is configured for outputting instructions as an information overlay, e.g., a video overlay.
M21. The method according to any of the preceding method embodiments with the features of M16, wherein the method comprises the data-processing system determining steps of different selected instruction sets that can be performed in parallel by a user, and wherein the method further comprises outputting said steps in a combined manner, e.g., an instruction to put several burger patties for different burgers on a grill.
M22. The method according to any of the preceding method embodiments with the features of M16, wherein the method comprises outputting different instructions of a same instruction set to different users.
M23. The method according to the preceding embodiment, wherein the method comprises outputting the different instructions to the different users based on a kitchen equipment that the users are respectively operating.
M24. The method according to any of the preceding method embodiments with the features of M21, wherein the method comprises at least one user interface outputting instructions that are to be performed in parallel.
M25. The method according to any of the preceding method embodiments with the features of M15, wherein the method comprises the at least one user interface outputting an indication of a remaining duration of a step corresponding to an instruction, such as a timer relating to a step.
M26. The method according to the preceding embodiment, particularly with the features of M18, wherein outputting the indication of the remaining duration of the step corresponding to the instruction is based on detecting a beginning of an execution of an instruction.
M27. The method according to any of the preceding method embodiments with the features of M18, wherein at least one of the output data elements relates to an execution of a pre-determined section of a movement corresponding to the output data element.
M28. The method according to the preceding embodiment, wherein the at least one output data element relating to the execution of the pre-determined section of the movement corresponding to the output data element further comprises an indication of an effect of the pre-determined section of the movement.
M29. The method according to any of the preceding method embodiments and with the features of M4 and M15, wherein the method comprises the data-processing system comparing a detected action of a user and/or a recognized object to an instruction outputted to the user, and the data-processing system further determining an execution quality based on a difference between the outputted instruction and the detected action and/or object.
M30. The method according to the preceding embodiment, wherein the outputted instruction relates to at least one of an action, at least one object, at least one process time and at least one object property like a colour or a handling detail.
M31. The method according to any of the two preceding embodiments, wherein detected action comprises an interaction with an object.
M32. The method according to any of the preceding method embodiments with the features of M29, wherein determining the execution quality comprises determining a difference between a detected filling level of at least one container and the outputted instruction.
M33. The method according to any of the preceding method embodiments with the features of M29, wherein determining the execution quality comprises determining a difference between a detected property of at least one ingredient and the outputted instruction.
M34. The method according to any of the preceding method embodiments with the features of M29, wherein determining the execution quality comprises determining a difference between at least one handling detail and the outputted instruction.
M35. The method according to any of the preceding method embodiments with the features of M29, wherein determining the execution quality comprises determining a difference between an intersection of objects and/or ingredients and the outputted instruction.
M36. The method according to any of the preceding method embodiments with the features of M29, wherein determining the execution quality comprises determining a difference between at least one of a detected dimension of an object, a detected colour of an object and a detected property of an object and the outputted instruction, and wherein the outputted instruction comprises an indication relation to the at least one of the dimension of the object, the detected colour of the object and the detected property of the object.
M37. The method according to any of the preceding method embodiments with the features of M29, wherein the method comprises the data-processing system processing the execution quality of a plurality of instructions executed by a same user and the data-processing system further determining a skill level of said user based thereon.
M38. The method according to any of the preceding method embodiments with the features of M29, wherein the method comprises outputting data to the user based on the list of instruction sets and the execution quality, particularly the skill level, of said user.
M39. The method according to any of the preceding method embodiments with the features of M29, wherein the method comprises the data-processing system determining an output data element for an instruction to be outputted to a user based on the execution quality, particularly the skill level, of said user.
M40. The method according to any of the preceding method embodiments with the features of M29 and M17, wherein the method comprises repeating outputting an output data element based on the execution quality determined for the detected action, particularly wherein the repeated outputting is performed by the at least one user interface.
M41. The method according to any of the preceding method embodiments with the features of M29, wherein the difference between the output instruction and the detected action comprises a difference of an execution time of the outputted instruction and a time associated with the instruction or instruction set.
M42. The method according to any of the preceding method embodiments with the features of M29, wherein the difference between the outputted instruction and the detected action comprises different levels of deviation of an execution time of the outputted instruction.
M43. The method according to any of the preceding method embodiments with the features of M29, particularly with the features of M37 and M21, wherein determining the steps of the different selected instruction sets that can be performed in parallel by the user is based on the execution quality determined for a user, particularly on the skill level of the user.
M44. The system according to any of the preceding method embodiments with the features of M42, wherein the method comprises showing the output by means of a colour code.
M45. The method according to any of the preceding method embodiments with the features of M42, wherein the method comprises obtaining a plurality of reference points from a recorded data set generated by a user wearing the wearable user interface, particularly AR glasses.
M46. The method according to any of the preceding method embodiments, wherein the method comprises the data-processing system receiving order data, wherein the order data indicate a plurality of orders.
M47. The method according to the preceding embodiment and with the features of M15, wherein the method comprises the data-processing system generating the list of instruction sets based on the order data and the stored instruction sets, wherein the list of instruction sets comprises several instruction sets, each instruction set corresponding to an order.
M48. The method according to any of the two preceding embodiments, wherein the order data further indicate for at least one order a modification, and
   wherein the method comprises the data-processing system modifying a respective instruction set of the list of instruction sets.
M49. The method according to any of the preceding method embodiments with the features of M15, wherein the list of instruction sets is ordered, i.e., items on the list are arranged in an order.
M50. The method according to the preceding embodiment and with the features of M47, wherein the method comprises the data-processing system modifying the order of the list of instruction sets based on order input data received from a user, such as a customer or a waitress/waiter, and/or a category associated with an instruction set.
M51. The method according to the preceding embodiment, wherein the method comprises the data-processing system associating a category to an instruction set based on an estimated execution time of the instruction set.
M52. The method according to any of the preceding method embodiments with the features of M46, wherein the method comprises the data-processing system receiving the order data from at least one of an electronic point of service system and a software application on an end-user computer device.
M53. The method according to any of the preceding method embodiments with the features of M47, wherein the method comprises the data-processing system determining an expected waiting time for orders based on the list of instruction sets.
M54. The method according to the preceding embodiment and with the features of M37, wherein determining the expected waiting time is further based on the determined skill level of at least one present user.
M55. The method according to any of the preceding method embodiments with the features of M53, wherein the method further comprises determining the expected waiting time for each of a plurality of products, wherein the determining is based on a free equipment capacity and the time associated with the respective instruction set.
M56. The method according to the two preceding embodiments, wherein the time associated with the respective instruction set is modified based on the skill level of the at least one present user.
M57. The method according to any of the preceding method embodiments with the features of M53, wherein the determining of the expected waiting for orders is based on at least one of the Critical Path Method (CPM) and a heuristic and/or solution strategy for of the Resource-Constrained Project Scheduling Problem (RCPSP), such as Branch and bound algorithms, Genetic algorithms, Simulated annealing, Ant colony optimization, Particle swarm optimization, and Critical path method (CPM) combined with heuristics.
M58. The method according to any of the preceding method embodiments with the features of M55 and M14, wherein determining the expected waiting time is further based on the indications of the kitchen equipment to the instructions comprise.
M59. The method according to any of the two preceding embodiments and with the features of M52, wherein the method comprises the data-processing system transmitting the expected waiting time to at least one of the electronic point of service system and the software application on the end-user computer device.
M60. The method according to any of the preceding method embodiments with the features of M52, wherein the method comprises the data-processing system sending offer data, such as menu offer data, to the at least one of the electronic point of service system and the software application, wherein the offer data comprise information relating to available dishes and/or drinks.
M61. The method according to the preceding embodiment, wherein the offer data comprise an order of the available dishes and/or drinks.
M62. The method according to any of the preceding method embodiments with the features of M53 and M61, wherein the method comprises the data-processing system modifying the order of the available dishes and/or drinks in response to the expected waiting time exceeding a maximum threshold or falling below a minimum threshold.
M63. The method according to the preceding embodiment, wherein modifying the order of the available dishes and/or drinks is further based on historic data relating to placed orders and the execution times associated with the instructions corresponding to a dish and/or drink, e.g., by means of extrapolation from the historic data,
   particularly wherein modifying the order of the available dishes and/or drinks is further based on a periodic simulation based on the historic data relating to placed orders and the execution times, particularly wherein the simulation is based on the historic data.
M64. The method according to any of the preceding method embodiments with the features of M53, wherein the method comprises the data-processing system sending a notification to further users, e.g., an offer to work.
M65. The method according to the preceding embodiment, wherein the method comprises the data-processing system further determining a bonus wage for users, such as employed users, that are off-duty based on a profit generated by additional users present in the kitchen.
M66. The method according to any of the preceding method embodiments with the features of M62, wherein the method comprises the data-processing system adding additional instruction sets to the list of instruction sets if the expected waiting time falls below a minimum threshold, wherein the additional instruction sets do not relate to a customer order, e.g., instruction sets relating to supporting activities or preparatory work.
M67. The method according to any of the preceding method embodiments with the features of M62, wherein the method comprises the data-processing system sending a notification to present users, allocating the users to different tasks and/or offering the possibility to leave the work space earlier.
M68. The method according to any of the preceding method embodiments with the features of M60, wherein the method comprises the system detecting a stock of ingredients and modifying the offer data, particularly the menu offer data, based thereon.
M69. The method according to the preceding embodiment, wherein each instruction set comprises an indication of at least one necessary ingredient, and
   wherein the method comprises not including corresponding dishes and/or drinks whose necessary ingredients are out of stock in the menu offer data.
M70. The method according to any of the two preceding embodiments, wherein at least one instruction set comprises an indication of at least one optional ingredient, and wherein the method comprises generating a notification for the corresponding dish and/or drink.
M71. The method according to any of the preceding method embodiments with the features of M14, wherein at least one of the instructions comprises an indication of an electronically controlled kitchen equipment, and
   wherein the method comprises sending equipment control data to the electronically controlled kitchen equipment based on the respective instruction.
M72. The method according to the preceding embodiment, wherein the equipment control data indicate an operation of the kitchen equipment.
M73. The method according to any of the preceding method embodiments, wherein the method comprises receiving modified instruction sets and modifying instructions of the plurality of instruction sets stored at the data-storage component accordingly.
M74. The method according to the preceding embodiment, wherein the method comprises the data-storage storing instruction-modification data, which instruction-modification data indicate modifications to instructions sets.
M75. The method according to any of the preceding method embodiments with the features of M16 and M73, wherein the method comprises each user interface outputting modification warning data when outputting the modified instructions, particularly wherein the outputting is based on the instruction modification data.
M76. The method according to the preceding embodiment and with the features of M29, wherein the method comprises the data-processing system determining the execution quality for the modified instructions and further determining whether modification warning data are output based on the respective execution quality, particularly wherein the determining is further based on historic execution quality data in response to modifications of instructions.
M77. The method according to any of the preceding method embodiments with the features of M12 and M20, wherein the method comprises providing a virtual environment mode, wherein in the virtual environment mode, instructions of an instruction set as well as corresponding kitchen equipment are outputted via the at least one user interface.
M78. The method according to the preceding embodiment and with the features of M14, wherein in the virtual environment mode, the method comprises the at least one user interface modifying the output in response to a virtual interaction of a user with an output kitchen equipment.
M79. The method according to any of the preceding method embodiments and with the features of M4, wherein the method comprises the data-processing system generating a new instruction set, wherein generating the new instruction set comprises
   - recording a preparation process performed by a at least one user by means of the sensor configured for detecting actions of the user,
   - determining single steps of the preparation process based on the recording of the preparation process,
   - determining kitchen equipment used for each single step,
   - generating instructions corresponding to the single steps, and
   - generating the instruction set based on the instructions.
M80. The method according to the preceding embodiment and with the features of M8 and/or M9, wherein the recording comprises video data, and wherein the method comprises the data-processing system processing the video data by means of an image recognition algorithm so as to determine the single steps.
M81. The method according to any of the preceding method embodiments with the features of M79, wherein recording the preparation process performed by the at least one user is recording the preparation process performed by at least one master user.
M82. The method according to the preceding embodiment, wherein the at least one master user is a plurality of master users and wherein the system is configured for receiving a plurality of recordings from the master users.
M83. The method according to the preceding embodiment, wherein at least two master users record the preparation process at different locations.
M84. The method according to any of the preceding method embodiments with the features of M79, wherein generating the instructions further comprises receiving at least one indication of at least one pre-determined section of a movement of the preparation process.
M85. The method according to the preceding embodiments with the features of M79, wherein generating the instructions further comprises receiving explanations and/or input data relating to said at least one pre-determined section of the movement, and further generation at least one element of output data based thereon.
M86. The method according to any of the preceding method embodiments with the features of M79, wherein determining the kitchen equipment used for each single step comprises at least one of receiving manually generated indications of corresponding equipment and the use of video analysis algorithms, such as computer vision algorithms. M87. The method according to any of the embodiments with the features of M79, wherein generating the new instruction set comprises recording the preparation process performed by a same user several times.
M88. The method according to the preceding embodiment, wherein at least one of the recordings relates to a purposeful wrong conduction of the preparation process and an indication of whether a result of the process is acceptable or not.
M89. The method according to any of the preceding method embodiments with the features of M79, particularly with the features of M11, wherein the recording further comprises recording audio data.
M90. The method according to any of the preceding method embodiments with the features of M79, wherein generating the new instruction set further comprises
   - outputting the generated instruction set to the user,
   - receiving modification data from the user, and
   - modifying the generated instruction set accordingly.
M91. The method according to any of the preceding method embodiments with the features of M79, wherein the method comprises the data-processing system determining an execution time for the generated instructions.
M92. The method according to the preceding embodiment, wherein the method comprises the data-processing system retrieving execution times for the generated instructions from an instruction data base.
M93. The method according to any of the preceding method embodiments with the features of M79, wherein the method comprises the data-processing system receiving audio data and generating output data elements based on the received audio data.
M94. The method according to any of the preceding method embodiments with the features of M79 and M17, wherein generating the new instruction set further comprises generating instruction-output data corresponding to the new instruction set.
M95. The method according to any of the preceding method embodiments with the features of M90 and M16, wherein generating the new instruction set comprises outputting the instructions in at least one of a kitchen and simulated environment.
M96. The method according to the preceding embodiment and with the features of M21, wherein generating the new instruction set comprises outputting the instruction set together with other instruction sets whose steps can be performed in parallel.
M97. The method according to any of the preceding method embodiments with the features of M79 and M29, wherein the method comprises outputting the new instruction set to at least one user in a kitchen several times and determining a development of the execution quality of the steps of the new instruction set based thereon.
M98. The method according to the preceding embodiment, wherein determining the development of the execution quality comprises determining a development of at least one of the execution time, a movement velocity and a fluidity of manual tasks.
M99. The method according to the preceding embodiment and with the features of M37, wherein the method comprises outputting the new instruction set to a plurality of users in a kitchen several times and determining the development of the execution quality of the steps of the new instruction set based thereon, particularly an execution quality of manual tasks.
M100. The method according to the preceding embodiment, wherein the method comprises determining differences between the development of the execution quality of different users and outputting data based thereon.
M101. The method according to the preceding embodiment, wherein the method comprises determining a learning speed of a user and/or a group of users based on the development of the execution quality of said user(s), particularly the at least one of the execution time, the movement velocity and the fluidity of the manual tasks.
M102. The method according to any of the preceding method embodiments with the features of M79, wherein generating the new instruction set comprises storing the new instruction set by the data-storage component.
M103. The method according to the preceding embodiment, wherein the method comprises the data-processing system sending the new instruction set to another data-processing system.
M104. The method according to any of the two preceding embodiments, wherein generating the new instruction set further comprises receiving kitchen-modification data from a user specifying modifications for a different kitchen.
M105. The method according to the preceding embodiment, wherein the method comprises the data-processing system only performing modifications indicated by the kitchen-modification data upon confirmation of a user, such as a standard master.
M106. The method according to the preceding embodiment and with the features of M103, wherein the method comprises sending the new instruction set to the other data-processing system after applying the kitchen-modification data.
M107. The method according to any of the preceding method embodiments with the features of M79 and M29, wherein the method comprises the data-processing system determining the execution quality for at least one newly generated instruction set.
M108. The method according to the preceding embodiment, wherein the method comprises the data-processing system outputting the execution quality for the at least one newly generated instruction set.
M109. The method according to any of the two preceding embodiments, wherein the method comprises the data-processing system outputting at least one instruction of the at least one newly generated instruction set based on the execution quality, such as an execution quality below a pre-determined threshold, and outputting the difference between the outputted instruction and the detected action.
M110. The method according to any of the preceding method embodiments with the features of M108 and particularly with the features of M90, wherein the method comprises the data-processing system receiving modification data from the user in response to the outputted difference between the outputted instruction and the detected action, and modifying the at least one instruction set accordingly.
Mill. The method according to the preceding embodiment, wherein the received modification data comprises receiving an indication to either modify the instruction based on the outputted difference or to not modify the instruction data.
M112. The method according to any of the two preceding embodiments, wherein the method comprises the data-processing system sending at least one of the received modification data and the at least one modified instruction set to the other data-processing system.
M113. The method according to any of the preceding method embodiments with the features of M8, wherein the camera of the at least one user interface is an overhead camera.
M114. The method according to any of the preceding method embodiments, wherein the at least one user interface is a plurality of user interfaces.
M115. The method according to any of the preceding method embodiments, wherein the data-processing system comprises a data transmission component configured for sending to and/or receiving data from at least one automated kitchen equipment, and
   wherein the method comprises the automated kitchen equipment performing at least one operation automatically,
   particularly wherein the method comprises using the at least one automated kitchen equipment.
M116. The method according to the preceding embodiment, particularly with the features of M14, wherein the method comprises the data-processing system sending at least one instruction to the at least one kitchen equipment, particularly based on the instruction's indication of the kitchen equipment to be used for the step.
M117. The method according to any of the preceding method embodiments, wherein the method is a method for supporting food and/or beverage preparation.
M118. The method according to the preceding embodiment, wherein the method is a method for supporting food and/or beverage preparation in gastronomy and/or a kitchen.
S119. The system according to any of the preceding system embodiments, wherein the system is configured for carrying out the method according to any of the method embodiments.

### Computer program product embodiments

Below, embodiments of a computer program product will be discussed. These embodiments are abbreviated by the letter "C" followed by a number. Whenever reference is herein made to the "computer program product embodiments", these embodiments are meant.
C1. A computer program product comprising instructions to cause the system according to any of the system embodiments to perform the steps of the method according to any of the method embodiments.

Exemplary features of the invention are further detailed in the figures and the below description of the figures.

### Brief description of the figures

Fig. 1 shows a system for controlling food preparation;
Fig. 2 shows several kitchens using said system;
Fig. 3 shows a restaurant comprising a kitchen and said system, and
Fig. 4 shows a dashboard for preparation processes and activities planned for a user.

### Detailed figure description

For the sake of clarity, some features may only be shown in some figures, and others may be omitted. However, also the omitted features may be present, and the shown and discussed features do not need to be present in all embodiments.

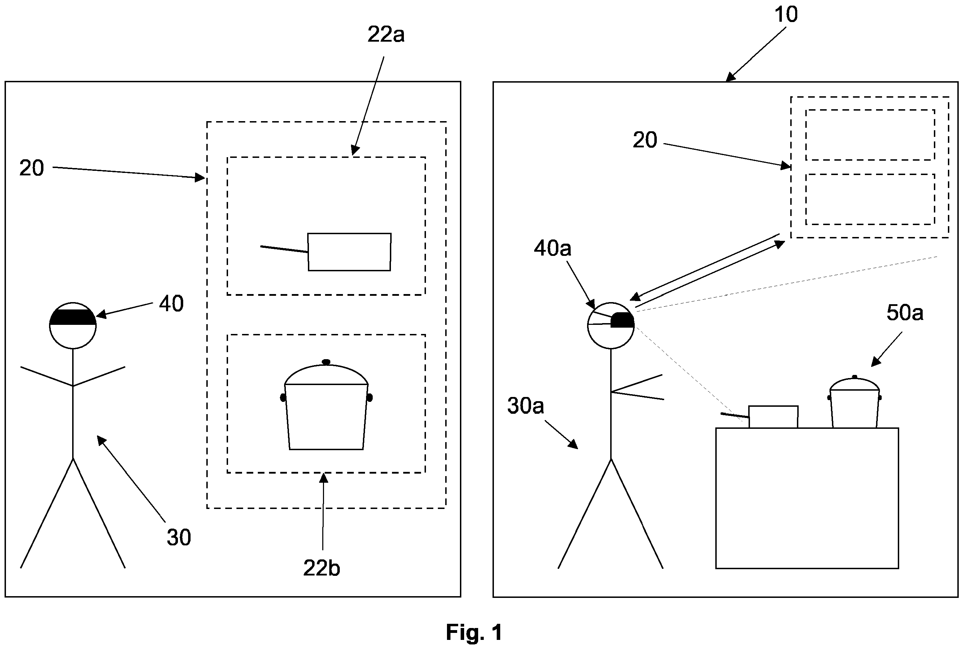

Fig. 1 shows a first user 30 using a user interface configured for outputting instructions 22a, 22b from an instruction set 20. The instructions 22a, 22b relate to food preparation. The instruction set relates to the preparation of a specific food, that is, a certain dish, or a specific drink.

In the example of Fig. 1, the user interface is a set of AR glasses 40, that is, augmented reality glasses, or VR glasses, that is, virtual reality glasses in a virtual training set-up. On the left of Fig. 1, the user 30 is shown receiving instructions 22a, 22b from the AR glasses 40 to learn a preparation of a dish specified by the instruction set 20.

In the example, the learning happens first in a virtual reality environment. That is, the user 30 receives the instructions 22a, 22b via the VR glasses and performs them in a first step in a virtual environment. In the virtual environment of the example, the real environment is not visible through the VR glasses.

After a learning phases, in the example, the instructions are shown by means of AR glasses, as can be seen on the right side of Fig. 1. The user can then perform the instructed steps in the kitchen, i.e., a real-world environment. Alternatively, the instructions may be shown by means of a screen in the kitchen. In the example of Fig. 1, each instruction 22a, 22b relates to a single action. That is, the instruction set 20 comprises instructions 22a, 22b relating to all single actions necessary to prepare a dish. For example, in case of a burger, the instruction set comprises
- inserting the burger bread in an oven,
- removing the burger bread from the oven,
- preparing bacon in a pan,
- preparing a fried egg in the pan,
- building the burger (including separate steps for further ingredients, such as salad, avocado, tomato and/or other ingredients),
- arranging the burger together with a side on a plate and
- passing the finished dish to the handover area for the waiter.

On the right of Fig. 1, the system is shown with a user 30a in a kitchen 10. The user interface captures actions of the user when preparing at least one dish according to the instruction set 20. The preparation may include the use of kitchen equipment 50a, e.g., a stove and cookware.

Further, the user interface is configured for capturing actions of the user. For example, movements of the user 30 are sensed and/or objects and their properties (color, shape, etc.) are recognized. The actions, such as the movements and/or the used objects, are compared to the instructions 22a, 22b. Based thereon, the system is configured for determining differences between the instructions 22a, 22b and the captured actions.

In the example of Fig. 1, at least one camera of the AR glasses is used for capturing the user's actions, including the movements that the user performs, such as stirring a content of a pot, and/or the objects that the user handles, including their properties. The system may however also comprise a camera at a different position, e.g., mounted to a ceiling of a kitchen.

Alternatively to the output via the AR glasses in the kitchen 10, the data can also be outputted by means of at least one or a plurality of screens. (This embodiment is not shown in Fig. 1. However, such screens may be optionally advantageous as a transitory solution as they may for example require less integration effort than AR glasses.)

In the kitchen 10, in one operation mode, the system is configured for outputting each instruction in a detailed manner. In this mode, more detailed feedback is outputted in case of determined differences between the instructions 22a, 22b and the actions of the user. In another operation mode, the system is configured for outputting the instructions in a more summarized manner. Optionally, feedback may also be output in a more summarized manner.

The operation mode of the system may be selected based on an experience level of a user 30. For example, less experienced users may require more guidance and feedback than more experienced users. In other words, an output of the system can be based on a skill level of the user 30. In an optional implementation, in case of a more experienced user, the faster and the more fluid his movements, the more upcoming steps might be outputted by the user interface to support a flow of state and action of the user.

Further, with AR glasses, the instructions are outputted together with an information overlay. That is, instructions including additional information are shown. Such additional information can, e.g., relate to a remaining time until ingredients need to be taken out of the oven or information about the properties of an ingredient (e.g., in case of meat being grilled, the doneness states medium vs. medium rare).

The system may be configured for indicating more important parts of user actions, e.g., movements. Such more important parts or sections of a movement can also be referred to as key points. As set out above, when taking a burger patty off the grill, the angle of the spatula is decisive for whether roast aroma sticks to the grill or the burger patty. Thus, the correct angle is indicated. Optionally, an explanation of the key point is also outputted. Optionally, the system triggers an activity of an element of the kitchen equipment, e.g., an activation of a stove or an oven. The system may trigger said activity upon detection of a completed action of a user, e.g. putting a burger bread in the oven, or upon expiry of a time, e.g. switching off the oven after a predetermined period of time.

The system may therefor send an instruction to such kitchen equipment, particularly automated kitchen equipment, such as an oven whose temperature can be remotely controlled.

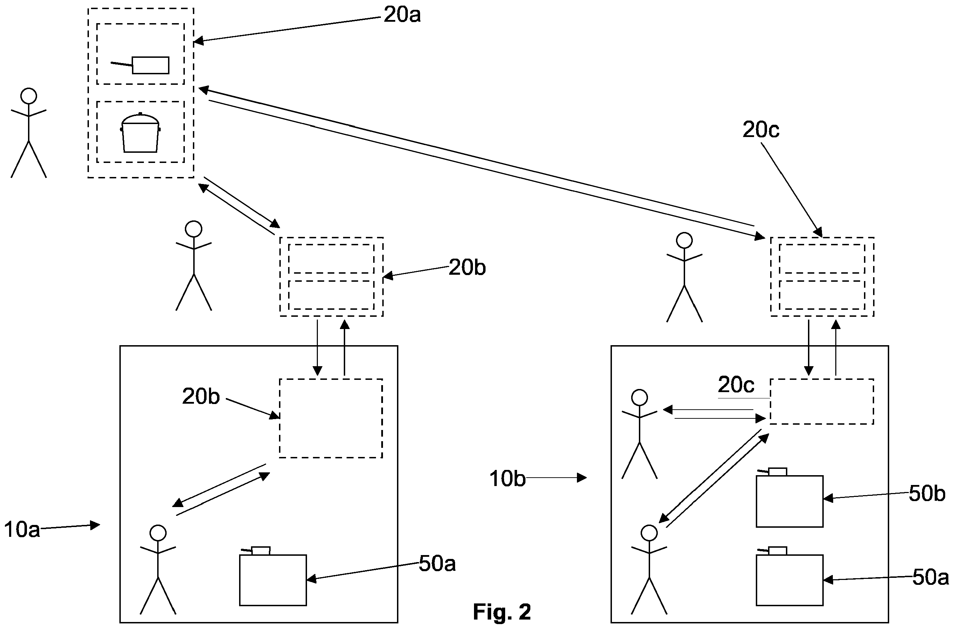

Fig. 2 shows the system in use with several kitchens.

A first user, e.g., a particularly experienced user, such as a standard master, generates the instruction set 20a using the user interface. As set out above, the user interface is configured for capturing actions of the first user. To generate the instruction set 20a, the first user performs a preparation of a corresponding dish and/or beverage at least once or several times. The system determines the single actions in the preparation and generates the corresponding instructions 22a, 22b.

Optionally, the system further determines differences between the preparations. Based thereon, the system can be configured for at least one of selecting one preparation, e.g., based on a lowest preparation time. The system can also be configured for outputting the differences of the preparations and/or corresponding instruction sets.

Thus, an instruction set may be generated. The instruction set may be a standard e.g. in a system catering business. In other words, the above may allow to define such a standard.

Upon generation of the instruction set 20a, the instruction set is transmitted to a plurality of kitchens 10a, 10b, such as kitchens in different restaurants 1. Each kitchen 10a, 10b may store a copy of the instruction set 20b, 20c.

The system is configured for outputting the generated instruction set together with other instruction sets. Thus, the instruction set can be evaluated in the context of a plurality of orders, comparable to a real-world situation, where several orders are placed in a restaurant in a short interval of time.

The instruction set 20b, 20c of the kitchens 10a, 10b is then output to users in the respective kitchen as set out above.

Further, as discussed with respect to Fig. 1, the instructions outputted in the learning phase are in line with the generated standard, thus optionally providing for training of the users in line with the defined standards.

Thus, the preparation process of foods and/or beverages may be split into tasks: The invention allows to break down one or several orders into single tasks, which can then be performed by an individual user, or a machine/equipment, or several users. In particular, the exemplary system may optionally advantageously allow to synchronize different tasks which can be conducted in parallel by a single user or by several users.

The person skilled in the art will easily understand that the disclosed invention may be applied productions everywhere where food is processed manually, e.g., in bakeries, central kitchens and catering kitchens, butcher shops where meat is processed manually, as well as, e.g., in a bar or a café where drinks are prepared. Also, the invention may be applied to an interaction of waiter/waitresses with guests.

Also, in contrast to the prior art, the preparation process may be split up in single tasks by a combination of AI and human interaction, as discussed above.

The instruction sets 20b, 20c may be modified for at least one kitchen. For example, in the different kitchens 10a, 10b, different sets of kitchen equipment 50a, 50b may be present. Thus, different instructions may be appropriate.

The modification of the instruction sets 20b, 20c based on the original instruction set 20a is performed in the example of Fig. 2 by a user respectively familiar with the respective kitchens. These users may for example be referred to as local standard masters.

Thus, the instruction sets defining standards may be adapted to the circumstances at concrete kitchens or restaurants.

Further, the system may determine differences between the instructions of the instruction sets 20b, 20c and the actions of the users in the different kitchens 10a, 10b as discussed with respect to Fig. 1. Based thereon, the system may determine an average learning speed of users for new standards.

Optionally, said differences may be output to a user, such as the local standard masters. The user may modify the instruction set 20b, 20c based thereon. The system may alternatively or additionally be configured for transmitting the differences to the first user. The first user may, based thereon, modify the instruction set 20a. The system may then transmit the modified instruction set 20a to the different kitchens 10a, 10b. For example, a device may display the differences to the first user. The device may then receive an input of the first user as to whether the differences relate to an improvement or a deterioration. If the device receives the input that the differences relate to an improvement, the modified instruction set 20a including the differences may be generated and transmitted to the different kitchens 10a, 10b. In another example, where the modification is a deterioration, the user may refuse to modify the instructions set. Optionally, in this case, the output in the learning phase may be adjusted. Hence, based on the data generated by the system, it may optionally also be possible to improve the learning process for defined standard. Thus, improvements may be introduced to the instruction sets. Negative variations may e.g. be addressed by additional training by the system or a trainer.

In other words, the kitchen users employees follow standards for preparation of foods or beverages. The standard may be a defined form of preparation/implementation. In the above example, the standard centrally defined, documented, maintained (i.e. adapted) and/or improved. Deviations from the standard may be controlled.

The standards are preferably be trained decentrally by the staff, i.e., by users in different kitchens. The standards may then be controlled and corrected locally.

If an adjustment of the standard occurs centrally, be it due to an adaptation to the environment (changed ingredients, changed equipment) or due to a locally identified improvement, this modification is then rolled out again, i.e., transmitted to the different kitchens.

When the centrally defined standard is also lived locally, a desired effect on the guest, i.e., provision of food and beverages with a reproducible, satisfying quality, and/or in the economic performance, such as in terms of efficiency, is achieved. When a locally identified improvement has been rolled out, it becomes a lived standard.

The system may be configured for outputting at least one indication of a change made to the instruction set. In other words, if the standard is modified, e.g., by the head quarter or another party, such information may optionally advantageously also be outputted by the user interface.

Further, the system may be configured for determining a learning speed of users for a specific instruction set, e.g. for all users, users at a restaurant or an individual user. Based thereon, the system may determine when to provide a user, a restaurant or all users with a new instruction set.

In contrast to the system shown in Fig. 2, nowadays, catering staff in the kitchen and at the bar receive the guest orders as so-called "receipts". These receipts do normally neither indicate which movements or actions are foreseen to prepare the food or drink, nor which work aids are to be used and in which order the food should be prepared etc. in order to achieve the best economic and operational result.

Also, nowadays, the "receipts" do not instruct the staff on how to proceed if several dishes are ordered at the same time, if several staff are working in the work area at the same time and if equipment/work aids are used at the same time. The same applies to other activities where users interact with several pieces of kitchen equipment.

Thus, in still other, the exemplary system may provide for a management of a flow of knowledge as regards the preparation of foods and/or beverages according to one or more standards.

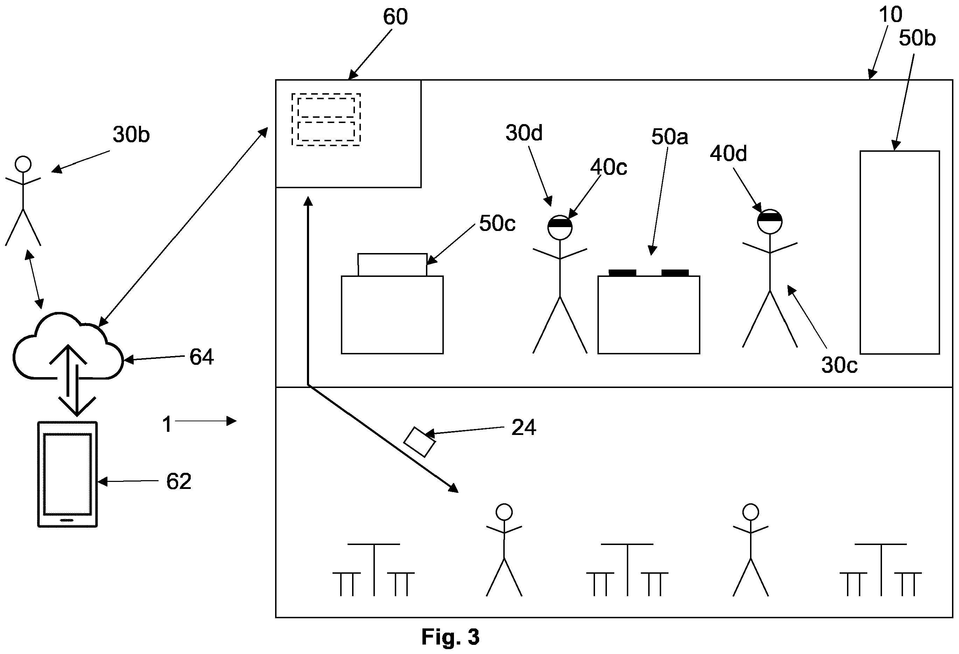

Fig. 3 shows an exemplary restaurant 1. The restaurant 1 comprises a kitchen 10. The kitchen comprises several sets of kitchen equipment 50a, 50b, 50c, e.g., an oven, stoves and a device for storage of cooled goods, such as a fridge or a cold storage room.

In the example of Fig. 3, a time is shown where several users 30c, 30d are active in the kitchen 10. Each user uses a wearable user interface 40b, 40c.

The system comprises a data-processing system 60 associated with the restaurant. The data-processing system 60 may be server. The data-processing system 60 may also be a portion of a cloud-computing system. The data-processing system 60 may be located in the restaurant 1 or elsewhere. The data-processing system 60 comprises a data-storage component, e.g., a memory, and a data processor.

The data-processing system 60 is configured for storing a plurality of instruction sets 20, 20a, 20b, 20c associated with the kitchen 10 of the restaurant 1. The data-processing system 60 is configured for receiving orders 24 from guests of the restaurant, e.g., by intermediary of a waiter/waitress or by means of a mobile application.

The system is configured for processing the orders 24 and outputting instructions 22a, 22b of instruction sets 20, 20a, 20b, 20c corresponding to the orders, e.g., to ordered dishes. Further, when outputting the instructions, the system is configured for determining which orders can be performed in parallel and for outputting the instructions correspondingly.

For that purpose, the system is configured for determining which instruction sets can be executed in parallel by a single user 30c, e.g., certain preparation steps of a salad while a burger bread is in heated in the oven. Further, the system is configured for determining which instruction sets can be executed in parallel by several users 30c, 30d in the kitchen, considering the available kitchen equipment 50a, 50b, 50c and working space.

Additionally, the system of Fig. 3 is configured for processing the orders 24 and determining whether a preparation capacity of the kitchen 10 and the present users 30 c, 30d corresponds to an amount of orders 24 or predicted orders. The predicted orders may for example be determined based on reservation data and/or historical data.

Also, the system of Fig. 3 is configured for dividing preparation processes into tasks that are assigned to different users, e.g., users operating different kitchen equipment. Thus, the system may optionally advantageously provide guidance for a plurality of users and support division of labour.

To further support operation of a plurality of users, the system is configured for determining a state and/or actions of the users in a same kitchen. Further, the system may be configured for outputting information about the state or actions of the other users being in the same kitchen to a user working there.

If the preparation capacity does not correspond to the amount of orders 24 or predicted orders, the system may perform further steps. For example, the system may be configured for modifying a list of offered foods or drinks, e.g., some drinks or foods that require more preparation capacity may be temporarily removed from the list of offered foods or drinks. The list of offered foods or drinks may for example by a menu of the restaurant.

The system may also be configured for outputting information regarding a waiting time associated with said products. The system is also configured for transmitting the list of offered products to an end-user computer device 62, such as a smartphone or a laptop computer. The list can for example be published as a menu on a website of the restaurant 1.

The waiting time can be determined as follows: A sum of equipment and employee capacities necessary for a product or a sum of products in a waiting line, in other words, for an order, is derived from a master trainer/chef instruction set. The master trainer instruction set/chef instruction set may be a recording of the preparation process by a chef or a master trainer.

As users, the master trainer and/or the professional chef records their activities, tags them and assigns them to the different resources (example: a burger has 60sec of employee handling time, 180 seconds of 1/6 of the grill, 90 seconds of 1/3 of a toaster).

When determining the waiting time, the employee handling time is adjusted to the user skill level. Equipment capacities may for example be defined when setting up a new restaurant/location.

In the example of Fig. 3, the system is further configured for sending data to further user(s) 30b in case of an under-capacity of the kitchen 10. The data-processing system sends the data via the internet 64 to the user interface 30b. The data comprises for example an offer to work or a call to work for users on standby.

Further, optionally, the system is configured for determining a wage for the additional users 30b so as to optimize at least one of a profitability, a revenue, a waiting times of customers, a flow state of users/employees and/or other metrics of the restaurant.

If the kitchen 10 comprises a preparation capacity above the amount of orders 24 or predicted orders, the system is configured for outputting instructions relating to other tasks, such as supporting activities and/or preparatory work. The preparatory works may for example comprise cutting ingredients, washing ingredients, prepacking and/or preportioning ingredients. The supporting activities may for example comprise cleaning activities, setting-up or setting-down the workspace and/or filling in stocks.

Further, the system is configured for sending instructions to at least one of the present users 30c, 30d in the kitchen 10 to leave the kitchen 10 if system determines that there will be a preparation capacity above the amount of orders 24 or predicted orders for a longer time.

The disclosed invention may thus provide for feedback to the guidance of a plurality of users, such as employees, in a kitchen.

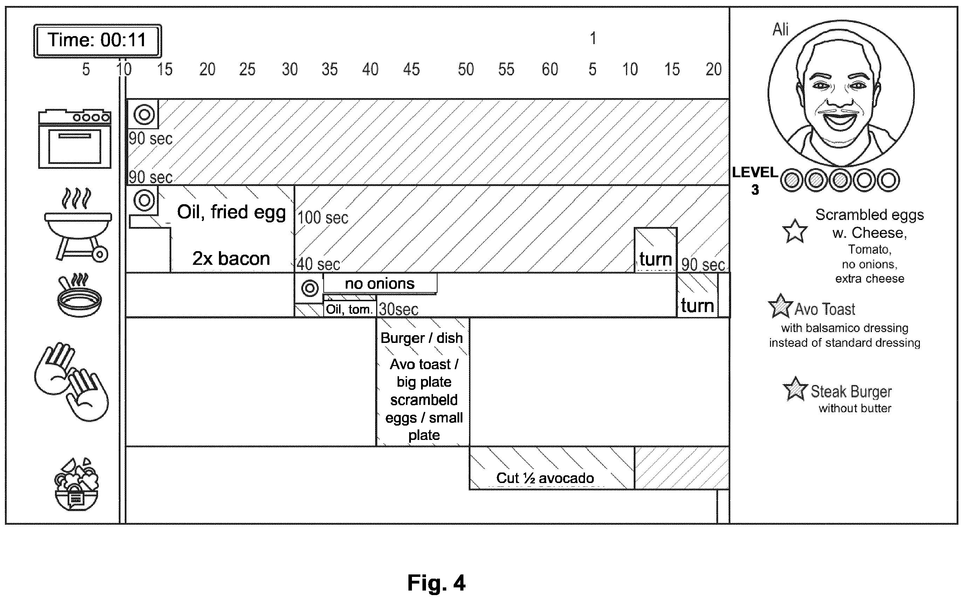

Fig. 4 shows three dishes assigned to a user. In the example of Fig. 4, these are scrambled eggs with cheese, an avocado toast and a steak burger. Further, an activity diagram for preparation of said dishes is shown.

Some of the dishes comprise modifications with respect to a standard version of the dish coming from the consumer/guest, e.g., tomato and extra cheese, but no onions with the scrambled eggs, the avocado with balsamico dressing instead of standard dressing, the burger without butter. The system is configured for outputting corresponding specific information regarding these customer wishes which are different to the standard version of the dish.

Further, the skill level of the exemplary user is indicated in Fig. 3.

Additionally, as can be seen in Fig. 4, some tasks are shown for parallel execution and the process times at that particular equipment, e.g., operation of an oven and frying of eggs and bacon on the grill. Also, for each activity, an icon of a corresponding kitchen equipment is shown.

During the preparation process, at the times indicated at a time line at an upper side of the activity diagram, respective instructions are outputted by the system. For example, at the indicated time 0:11, an instruction for operating the oven is outputted. Optionally, the instruction corresponding to the next step, i.e., the operation of the grill, is also already outputted.

The output can be a flow chart but also a list of tasks or short videos or other interfaces. Generally, the user may be provided with the following information: order in which the tasks are processed and what particularities to be considered.

While in the above, preferred embodiments has been described with reference to the accompanying drawings, the skilled person will understand that these embodiments were provided for illustrative purpose only and should by no means be construed to limit the scope of the present invention, which is defined by the claims.

Whenever a relative term, such as "about", "substantially" or "approximately" is used in this specification, such a term should also be construed to also include the exact term. That is, e.g., "substantially straight" should be construed to also include "(exactly) straight".

Whenever steps were recited in the above or also in the appended claims, it should be noted that the order in which the steps are recited in this text may be accidental. That is, unless otherwise specified or unless clear to the skilled person, the order in which steps are recited may be accidental. That is, when the present document states, e.g., that a method comprises steps (A) and (B), this does not necessarily mean that step (A) precedes step (B), but it is also possible that step (A) is performed (at least partly) simultaneously with step (B) or that step (B) precedes step (A). Furthermore, when a step (X) is said to precede another step (Z), this does not imply that there is no step between steps (X) and (Z). That is, step (X) preceding step (Z) encompasses the situation that step (X) is performed directly before step (Z), but also the situation that (X) is performed before one or more steps (Y1), ..., followed by step (Z). Corresponding considerations apply when terms like "after" or "before" are used.

## Claims

1. A system, comprising
- a data-processing system comprising a data-storage component configured for storing a plurality of instruction sets,
- at least one or a plurality of user interface(s) configured for outputting data, and
- at least one sensor;
wherein the at least one sensor is configured for detecting at least one action of a user, particularly a plurality of actions of a plurality of users,
wherein the system is configured for detecting the at least one action by processing data generated by the at least one sensor using a data-processing algorithm,
wherein at least one of the instruction sets comprises a plurality of instructions, wherein each instruction relates to a single step to be performed,
wherein each user interface is configured for outputting instructions based on a list of instruction sets,
wherein the at least one user interface is configured for outputting the instructions via at least one of audio, text and video, and
wherein each user interface is configured for outputting the instructions based on the actions of the user, particularly wherein each user interface is configured for outputting an instruction of an instruction set only after detecting an execution of a preceding instruction.

2. The system according to the preceding claim, wherein the data-storage component is configured for storing instruction-output data comprising output data elements, wherein each output data element corresponds to at least one instruction.

3. The system according to any of the preceding claims, wherein at least one of the output data elements relates to an execution of a pre-determined section of a movement corresponding to the output data element, and
wherein particularly, the at least one output data element relating to the execution of the pre-determined section of the movement corresponding to the output data element further comprises an indication of an effect of the pre-determined section of the movement.

4. The system according to any of the preceding claims, wherein the data-processing system is configured for determining steps of different selected instruction sets that can be performed in parallel by a user and for outputting said steps in a combined manner,
wherein the system is configured for outputting different instructions of a same instruction set to different users, and
wherein particularly, the system is configured for outputting the different instructions to the different users based on a kitchen equipment that the users are respectively operating.

5. The system according to any the preceding claims, wherein the user interface(s) are wearable, wherein at least one of the user interface(s) comprises a camera configured for detecting at least one of (a) actions of the user and (b) objects in front of the user,
wherein the at least one sensor comprises the camera, and
wherein the at least one user interface(s) comprise AR glasses, wherein the at least one user interface(s) is configured for outputting instructions as an information overlay.

6. The system according to any of the preceding claims, wherein the data-processing system is configured for comparing a detected action of a user and/or a recognized object to an instruction outputted to the user and for determining an execution quality based on a difference between the outputted instruction and the detected action and/or object,
wherein the outputted instruction relates to at least one of an action, at least one object, at least one process time and at least one object property like a colour or a handling detail and/or wherein the detected action comprises an interaction with an object.

7. The system according to the preceding claim, wherein the data-processing system is configured for processing the execution quality of a plurality of instructions executed by a same user and for determining a skill level of said user based thereon,
wherein the data-processing system is configured for determining an output data element for an instruction to be output to a user based on the execution quality, particularly the skill level, of said user.

8. The system according to any of the preceding claims, wherein the data-processing system is configured for receiving order data, wherein the order data indicate a plurality of orders,
wherein the data-processing system is configured for generating the list of instruction sets based on the order data and the stored instruction sets, wherein the list of instruction sets comprises several instruction sets, each instruction set corresponding to an order, and
wherein the data-processing system is configured for receiving the order data from at least one of an electronic point of service system and a software application on an end-user computer device.

9. The system according to the preceding claim, wherein the data-processing system is configured for determining an expected waiting time for orders based on the list of instruction sets,
wherein determining the expected waiting time is further based on the determined skill level of at least one present user, and
wherein the time associated with the respective instruction set is modified based on the skill level of the at least one present user.

10. The system according to preceding claim, wherein the data-processing system is configured for transmitting the expected waiting time to at least one of the electronic point of service system and the software application on the end-user computer device.

11. The system according to any of the three preceding claims, wherein the data-processing system is configured for sending offer data, such as menu offer data, to the at least one of the electronic point of service system and the software application, wherein the offer data comprise information relating to available dishes and/or drinks,
wherein the offer data comprise an order of the available dishes and/or drinks,
wherein the data-processing system is configured for modifying the order of the available dishes and/or drinks in response to the expected waiting time exceeding a maximum threshold or falling below a minimum threshold.

12. The system according to any of the preceding claims, wherein the system is configured for receiving modified instruction sets and for modifying instructions of the plurality of instruction sets stored at the data-storage component accordingly,
wherein the data-storage component is configured for storing instruction-modification data, which instruction-modification data indicate modifications to instructions sets.

13. The system according to any of the preceding claims, wherein the data-processing system is configured for generating a new instruction set, wherein generating the new instruction set comprises
- recording a preparation process performed by a at least one user by means of the sensor configured for detecting actions of the user,
- determining single steps of the preparation process based on the recording of the preparation process,
- determining kitchen equipment used for each single step,
- generating instructions corresponding to the single steps, and
- generating the instruction set based on the instructions,
wherein the recording comprises video data, and the data-processing system is configured for processing the video data by means of an image recognition algorithm so as to determine the single steps.

14. A method, comprising
- storing a plurality of instruction sets by means of a data-processing system comprising a data-storage component,
- outputting data by means of at least one or a plurality of user interface(s), and
- detecting at least one action of a user, particularly a plurality of actions of a plurality of users, wherein the method comprises performing the detecting by means of at least one sensor,
- each user interface outputting instructions based on a list of instruction sets and based on the actions of the user, and
- the at least one user interface outputting the instructions via at least one of audio, text and video;
wherein detecting the at least one action comprises processing data generated by the at least one sensor using a data-processing algorithm,
wherein at least one of the instruction sets or each instruction set comprises a plurality of instructions,
wherein each instruction relates to a single step to be performed, such as frying, cutting, cooking, or arranging on a plate,
wherein, particularly, the method comprises each user interface outputting an instruction of an instruction set only after detecting an execution of a preceding instruction.

15. A computer program product comprising instructions to cause the system according to any of the system embodiments to perform the steps of the method according to any of the method embodiments.
